(19) **Europäisches Patentamt / European Patent Office / Office européen des brevets**

(11) **EP 4 361 771 A1**

(12) # EUROPEAN PATENT APPLICATION
published in accordance with Art. 153(4) EPC

(43) Date of publication:
01.05.2024 Bulletin 2024/18

(21) Application number: 21950387.7

(22) Date of filing: 17.07.2021

(51) International Patent Classification (IPC):
*G06F 3/01* (2006.01)     *G06F 18/00* (2023.01)
*G06N 20/00* (2019.01)

(86) International application number:
PCT/CN2021/106968

(87) International publication number:
WO 2023/000119 (26.01.2023 Gazette 2023/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129 (CN)

(72) Inventors:
• WANG, Di
Shenzhen, Guangdong 518129 (CN)

• LI, Teng
Shenzhen, Guangdong 518129 (CN)
• HUANG, Wei
Shenzhen, Guangdong 518129 (CN)
• XU, Wenkang
Shenzhen, Guangdong 518129 (CN)
• YU, Jiapeng
Shenzhen, Guangdong 518129 (CN)
• LAN, Ruidong
Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **GESTURE RECOGNITION METHOD AND APPARATUS, SYSTEM, AND VEHICLE**

(57) This application relates to the field of intelligent vehicle technologies. Embodiments of this application provide a gesture recognition method and apparatus, a system, and a vehicle. In embodiments of this application, a refined first 3D feature is obtained in combination with a first machine learning model based on a first image and a second image. The first 3D feature includes a 3D contour feature of a body part corresponding to a gesture motion. Fingertip-level gesture motion information can be inferred based on the first 3D feature, and the fingertip-level gesture motion information can accurately correspond to a specific function or interaction object, to complete gesture interaction. This makes gesture control and gesture-based human-machine interaction more accurate, efficient, simple, convenient, flexible, safe, and reliable.

EP 4 361 771 A1

FIG. 1

**Description**

**TECHNICAL FIELD**

Embodiments of this application relate to the field of intelligent vehicle technologies, and in particular, to a gesture recognition method and apparatus, a device, a computer-readable storage medium, a system, and a vehicle.

**BACKGROUND**

In a vehicle driving process, a driver often needs to operate various buttons or a central display screen, resulting in a vehicle safety risk. Especially, with an increasing size and an added integrated control function of the central display screen, a factor of distracting attention of the driver is further added. Although a head-up display (head-up display, HUD) can resolve, to some extent, a distraction caused when the driver needs to lower the head or turn the head to obtain driving information, the HUD can only be used to display known information and project the information, and cannot interact with the driver. In the future, the HUD will be more popular and may be extended to an entire front windshield, to provide more driving information for the driver. Therefore, a manner in which the HUD can interact with the driver is required, and gesture-based interaction is a common choice. In addition, with development of intelligent vehicles, types of vehicle-mounted devices are increasingly complex, and these vehicle-mounted devices may be accurately controlled through gesture-based human-machine interaction when safe driving is ensured.

Therefore, a high-precision gesture recognition method is required, to enable a user in a cockpit environment to accurately interact with various vehicle-mounted devices by using a gesture.

**SUMMARY**

In view of the foregoing problem, embodiments of this application provide a gesture recognition method and apparatus, a device, a computer-readable storage medium, a system, and a vehicle, so that gesture control and gesture-based human-machine interaction are more accurate and reliable.

To achieve the foregoing objective, a first aspect of this application provides a gesture recognition method, including:

obtaining a first image and a second image, where the first image and the second image include a body part corresponding to a gesture motion;
obtaining key point data of the body part based on the first image;
obtaining human body point cloud data based on the second image;
obtaining a first 3D feature based on the key point data, the human body point cloud data, and a first machine learning model, where the first 3D feature includes a 3D contour feature of the body part; and
determining gesture motion information of a user based on the first 3D feature.

In this way, the refined first 3D feature is obtained based on the first image, the second image, and the first machine learning model. Because the first machine learning model is added to the first 3D feature, and information about a plurality of images is combined, data precision, data accuracy, and feature integrity of the first 3D feature are effectively improved. Consequentially, the gesture motion information obtained based on the first 3D feature is more accurate. Therefore, accuracy and reliability of gesture control and gesture-based human-machine interaction can be improved, so that the user can perform precise control and human-machine interaction by using a gesture. This is applicable to a vehicle cockpit environment and can improve driving safety of a vehicle.

In a possible implementation of the first aspect, the first 3D feature further includes a 3D location of a joint point of the body part. In this way, accuracy of the gesture motion information can be further improved based on the 3D location of the joint point in the first 3D feature.

In a possible implementation of the first aspect, the first image is obtained at a first preset angle by using a first camera, and the second image is obtained at a second preset angle by using a second camera. In this way, the first image and the second image are collected from different angles, so that content included in the first image and content included in the second image are complementary to each other, to avoid a loss of a hand detail in the first 3D feature due to local shielding or another factor, and further improve data precision and feature integrity of the first 3D feature.

In a possible implementation of the first aspect, the body part includes an upper limb part corresponding to the gesture motion, and the first 3D feature includes a 3D contour feature of the upper limb part and a 3D location of a joint point of the upper limb part. In this way, more feature details related to the gesture motion can be obtained by using the upper limb part, to further improve data precision and feature integrity of the first 3D feature.

In a possible implementation of the first aspect, the obtaining a first 3D feature based on the key point data, the human body point cloud data, and a first machine learning model specifically includes:

> obtaining a second 3D feature based on the key point data and the human body point cloud data, where the second 3D feature includes the 3D contour feature of the body part;
> obtaining a third 3D feature based on the key point data and the second 3D feature, where the third 3D feature includes the 3D contour feature of the body part and a first 3D location of the joint point of the body part; and
> obtaining the first 3D feature based on the third 3D feature and the first machine learning model, where the first 3D feature includes the 3D contour feature of the body part and a second 3D location of the joint point of the body part.

In this way, the point cloud data is first meshed to obtain the second 3D feature including the contour feature. Then, the third 3D feature including a location of an internal joint point is obtained based on the key point data and the second 3D feature. Finally, the first 3D feature is obtained through reconstruction in combination with the first machine learning model. Consequentially, the 3D location of the joint point and a feature of a 3D contour surface are corrected, and an obvious error, for example, a joint point misplacement, can be eliminated as much as possible, to obtain the high-precision first 3D feature.

In a possible implementation of the first aspect, the obtaining the first 3D feature based on the third 3D feature and the first machine learning model specifically includes:

> determining a reconstruction parameter based on key point data unused for the third 3D feature, the third 3D feature, and the first machine learning model; and
> performing human body reconstruction and human hand reconstruction based on the reconstruction parameter and the first machine learning model, to obtain the first 3D feature.

In this way, human body reconstruction and human hand reconstruction are performed based on the third 3D feature including the location of the internal joint point, the key point data that is not applied to the third 3D feature, and the first machine learning model, so that a detail (for example, a blocked hand detail) that may be lost in the first 3D feature may be further supplemented or detail (for example, joint point misplacement) that may be incorrect can be corrected based on the key point data, to further improve integrity and accuracy of the first 3D feature.

In a possible implementation of the first aspect, the first machine learning model includes a parameterized human body model and a parameterized human hand model. In this way, the first 3D feature can be obtained under constraint of both the parameterized human body model and the parameterized human hand model, to avoid a case in which a hand joint point is incorrectly positioned to an arm, or an arm joint point is incorrectly positioned to a palm, so as to further improve accuracy and accuracy of the hand detail in the first 3D feature.

In a possible implementation of the first aspect, the method further includes: before the obtaining a first 3D feature, projecting the key point data and the human body point cloud data to a predetermined coordinate system, to complete registration.

In a possible implementation of the first aspect, the gesture motion information includes one or more of fingertip falling point information, finger pointing direction information, fingertip movement track information, gesture type information, and first indication information, and the first indication information indicates that the gesture motion is effective or ineffective. In this way, accuracy and reliability of gesture control and gesture-based human-machine interaction may be improved based on various types of gesture motion information.

In a possible implementation of the first aspect, the determining gesture motion information of a user based on the first 3D feature includes:

> obtaining one or more of user information of the gesture motion, a pose of the body part, and a movement track of the body part based on the 3D location of the joint point of the body part of the first 3D feature; and
> obtaining the first indication information of the gesture motion based on the one or more of the user information, the pose of the body part, and the movement track of the body part.

In this way, the first indication information can be accurately obtained based on the first 3D feature, so that a case in which "a hand motion of the user is misrecognized as a gesture command when the user does not have a user intention" or the like is eliminated based on the first indication information, to improve accuracy of gesture recognition.

In a possible implementation of the first aspect, the gesture recognition method further includes: implementing interaction between an interaction object and the user in response to the gesture motion information. In this way, accurate and reliable human-machine interaction may be implemented based on high-precision gesture motion information.

In a possible implementation of the first aspect, the gesture recognition method further includes: when the first indication information indicates that the gesture motion is effective, implementing interaction between an interaction object and the user based on the gesture motion information. It may be understood that the interaction object includes a human-machine interaction interface, for example, a HUD interface element, a control panel label, or a button. In this way, accurate and reliable human-machine interaction and object control can be implemented based on the high-precision gesture motion information and the first indication information in the gesture motion information.

A second aspect of this application provides a gesture recognition apparatus, including:

an obtaining unit, configured to obtain a first image and a second image, where the first image and the second image include a body part corresponding to a gesture motion;
a key point unit, configured to obtain key point data of the body part based on the first image;
a point cloud unit, configured to obtain human body point cloud data based on the second image;
a feature extraction unit, configured to obtain a first 3D feature based on the key point data, the human body point cloud data, and a first machine learning model, where the first 3D feature includes a 3D contour feature of the body part; and
a determining unit, configured to determine gesture motion information of a user based on the first 3D feature.

In a possible implementation of the second aspect, the first 3D feature further includes a 3D location of a joint point of the body part.

In a possible implementation of the second aspect, the obtaining unit is specifically configured to obtain the first image at a first preset angle by using a first camera; and/or is specifically configured to obtain the second image at a second preset angle by using a second camera.

In a possible implementation of the second aspect, the body part includes an upper limb part corresponding to the gesture motion, and the first 3D feature includes a 3D contour feature of the upper limb part and a 3D location of a joint point of the upper limb part.

In a possible implementation of the second aspect, the feature extraction unit is specifically configured to:

obtain a second 3D feature based on the key point data and the human body point cloud data, where the second 3D feature includes the 3D contour feature of the body part;
obtain a third 3D feature based on the key point data and the second 3D feature, where the third 3D feature includes the 3D contour feature of the body part and a first 3D location of the joint point of the body part; and
obtain the first 3D feature based on the third 3D feature and the first machine learning model, where the first 3D feature includes the 3D contour feature of the body part and a second 3D location of the joint point of the body part.

In a possible implementation of the second aspect, the feature extraction unit is specifically configured to:

determine a reconstruction parameter based on key point data unused for the third 3D feature, the third 3D feature, and the first machine learning model; and
perform human body reconstruction and human hand reconstruction based on the reconstruction parameter and the first machine learning model, to obtain the first 3D feature.

In a possible implementation of the second aspect, the first machine learning model includes a parameterized human body model and a parameterized human hand model.

In a possible implementation of the second aspect, the feature extraction unit is further configured to: before obtaining the first 3D feature, project the key point data and the human body point cloud data to a predetermined coordinate system, to complete registration.

In a possible implementation of the second aspect, the gesture motion information includes one or more of fingertip falling point information, finger pointing direction information, fingertip movement track information, gesture type information, and first indication information, and the first indication information indicates that the gesture motion is effective or ineffective.

In a possible implementation of the second aspect, the determining unit is specifically configured to:

obtain one or more of user information of the gesture motion, a pose of the body part, and a movement track of the body part based on the 3D location of the joint point of the body part of the first 3D feature; and
obtain the first indication information of the gesture motion based on the one or more of the user information, the pose of the body part, and the movement track of the body part.

In a possible implementation of the second aspect, the gesture recognition apparatus further includes: an interaction unit, configured to implement interaction between an interaction object and the user in response to the gesture motion information.

In a possible implementation of the second aspect, the interaction unit is specifically configured to: when the first indication information indicates that the gesture motion is effective, implement the interaction between the interaction object and the user based on the gesture motion information.

A third aspect of this application provides an electronic device, including:

at least one processor; and
at least one memory, where the memory stores a computer program, and when the computer program is executed by the at least one processor, the gesture recognition method according to any one of the first aspect and the possible implementations of the first aspect is implemented.

A fourth aspect of this application provides a computer-readable storage medium. The computer-readable storage medium stores program instructions, and when the program instructions are executed by a computer, the computer is enabled to perform the gesture recognition method according to any one of the first aspect and the possible implementations of the first aspect.

A fifth aspect of this application provides a gesture-based human-machine interaction system, including:

a first camera, configured to collect a first image, where the first image includes a body part corresponding to a gesture motion;
a second camera, configured to collect a second image, where the second image includes a body part corresponding to the gesture motion;
at least one processor; and
at least one memory, where the memory stores a computer program, and when the computer program is executed by the at least one processor, the at least one processor is enabled to perform the gesture recognition method according to any one of the first aspect and the possible implementations of the first aspect.

In a possible implementation of the fifth aspect, the first camera may be installed at a first location of a vehicle cockpit, for example, a central control area, a steering pillar area, or an A-pillar area on a driver side, and is specifically configured to collect the first image at a first preset angle; and/or the second camera may be installed at a second location of the vehicle cockpit, for example, a rear view mirror location in the cockpit, an A-pillar area on a front passenger side, or a center console area, and is specifically configured to collect the second image at a second preset angle. In this way, information complementarity between the first image and the second image can be implemented, to further improve data accuracy and feature integrity of a first 3D feature. It may be understood that the first location and the second location may be the same or different, and the first angle and the second angle may be the same or different. Installation locations and image capture angles of the first camera and the second camera may be adjusted based on a cockpit layout design and a requirement on the collected first and second images. This is not limited in embodiments of this application.

A sixth aspect of this application provides a vehicle, including the computing device according to any one of the third aspect and the possible implementations of the third aspect, the computer-readable storage medium according to any one of the fourth aspect and the possible implementations of the fourth aspect, or the gesture-based human-machine interaction system according to any one of the fifth aspect and the possible implementations of the fifth aspect.

In embodiments of this application, the key point data is obtained based on the first image, and the human body point cloud data is obtained based on the second image. The human body point cloud data implicitly includes a human body contour feature of the user, the key point data implicitly includes a skeleton feature of the user, and the key point data and the human body point cloud data complement each other. Therefore, the first 3D feature may have both an external contour feature and an internal skeleton feature of a human body. In addition, the first machine learning model is introduced, to implement refinement of the first 3D feature, to improve precision. In this way, the high-precision gesture motion information can be obtained based on the first 3D feature, to implement accurate gesture control (for example, fingertip-level control) and gesture-based human-machine interaction.

## BRIEF DESCRIPTION OF DRAWINGS

The following further describes features in embodiments of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are shown. A combination of the features shown in the accompanying drawings is not intended to limit this application. In addition, in this specification, content indicated by same reference signs is also the same. The specific accompanying drawings are described as follows:

FIG. 1 is a schematic flowchart of a gesture recognition method according to an embodiment of this application;

FIG. 2 is a schematic flowchart of an example of an implementation of obtaining a first 3D feature according to an embodiment of this application;

FIG. 3 is a schematic flowchart of an example of a specific implementation of obtaining a third 3D feature according to an embodiment of this application;

FIG. 4 is a schematic flowchart of an example of a specific implementation of obtaining a 3D mesh body according to an embodiment of this application;

FIG. 5 is a schematic diagram of a structure of a gesture recognition apparatus according to an embodiment of this application;

FIG. 6 is a schematic diagram of a structure of an electronic device according to an embodiment of this application;

FIG. 7 is a schematic diagram of a structure of a gesture-based human-machine interaction system according to an embodiment of this application;

FIG. 8 is an example diagram of installing a first camera according to an embodiment of this application;

FIG. 9 is an example diagram of installing a second camera according to an embodiment of this application;

FIG. 10 is a schematic flowchart of gesture recognition and control in a gesture-based human-machine interaction system according to an embodiment of this application;

FIG. 11a and FIG. 11b each are a schematic diagram of an example of an application scenario according to an embodiment of this application;

FIG. 12 is a schematic diagram of an example of a predetermined gesture according to an embodiment of this application;

FIG. 13a and FIG. 13b each are a schematic diagram of an example of a double-finger drag gesture according to an embodiment of this application;

FIG. 14a to FIG. 14d each are a schematic diagram of an example of a gesture of spreading a thumb and an index finger according to an embodiment of this application; and

FIG. 15a to FIG. 15d each are a schematic diagram of an example of a gesture of spreading an index finger according to an embodiment of this application.

## DESCRIPTION OF EMBODIMENTS

In this specification and claims, terms "first", "second", "third", and the like or similar terms such as a unit A, a unit B, and a unit C are merely used to distinguish between similar objects, and do not represent a specific order of the objects. It may be understood that specific orders or sequences may be exchanged if permitted, so that embodiments of this application described herein can be implemented in an order other than an order illustrated or described herein.

In the following descriptions, involved reference numerals such as S110 and S 120 that indicate steps do not necessarily indicate that the steps are to be performed based on the order, and consecutive steps may be transposed if allowed, or may be performed simultaneously.

The following first describes meanings of terms and some important terms in this application.

Unless otherwise defined, all technical and scientific terms used in this specification have same meanings as those usually understood by a person skilled in the art of this application. In case of any inconsistency, the meaning described in this specification or the meaning obtained based on the content recorded in this specification shall prevail. In addition, the terms used in this specification are merely for the objective of describing embodiments of this application, but are not intended to limit this application.

To accurately describe technical content in this application and accurately understand technical solutions in embodiments of this application, the following explanations, descriptions, or definitions are first provided for terms used in this specification before specific implementations are described.

A HUD, also referred to as head up display, can project important driving information such as a speed, an engine revolution speed, a battery level, and navigation to a windshield in front of a driver. In this way, the driver can view vehicle parameters and the driving information such as the speed, the engine revolution speed, the battery level, and the navigation without lowering or turning the head.

A time of flight (Time of Flight, TOF) camera transmits an optical pulse to a target object, and records a reflection time point or round-trip motion duration of the optical pulse, to calculate a distance between an optical pulse transmitter and the target object, so as to generate a 3D image of the target object. The 3D image includes depth information of the target object and information of reflected light intensity.

A two-dimensional (two-dimensional, 2D) image is an image only includes plane information, and may be but is not limited to an RGB image, an IR image, or the like.

A depth image is an image of any type, including depth information, and may be but is not limited to a TOF image or another type of image including depth information.

An infrared (infrared, IR) camera, also referred to as a thermal imaging camera, is a photographic apparatus that is developed according to an infrared radiation principle in which an object temperature is higher than a space absolute temperature. The camera generates a thermal image by detecting infrared radiation.

A color (Red Green Blue, RGB) camera is used to colorfully image an object by sensing natural light or near infrared light reflected by the object.

A camera coordinate system is a three-dimensional rectangular coordinate system. An optical center of a camera is used as a coordinate origin, a Z axis is used as an optical axis of the camera, an X axis and a Y axis are respectively parallel to an X axis and a Y axis in an image coordinate system, and Pc (Xc, Yc, Zc) usually represents a coordinate value of the camera coordinate system.

Calibration information of a camera includes an extrinsic parameter and intrinsic parameter of the camera. The intrinsic parameter and extrinsic parameter of the camera may be obtained through the Zhang Zhengyou calibration. In embodiments of this application, an intrinsic parameter and extrinsic parameter of a first camera and an intrinsic parameter and extrinsic parameter of a second camera are all calibrated in a same world coordinate system.

The extrinsic parameter of the camera may determine a relative location relationship between the camera coordinate system and the world coordinate system, and includes a rotation matrix R and a translation vector T. Pinhole imaging is used as an example, the extrinsic parameter of the camera, world coordinates, and camera coordinates meet a relational expression (1):

$$Pc = RPw + T \qquad (1)$$

Herein, Pw is world coordinates, Pc is camera coordinates, T = (Tx, Ty, Tz) is a translation vector, R = R ($\alpha$, $\beta$, $\gamma$) is a rotation matrix, and $\gamma$ is an angle of rotating around the Z axis of the camera coordinate system, $\beta$ is an angle of rotating around the Y axis of the camera coordinate system, and $\alpha$ is angle of rotating around the X axis of the camera coordinate system. The six parameters, to be specific, $\alpha$, $\beta$, y, Tx, Ty, and Tz, constitute an extrinsic parameter of the camera.

The intrinsic parameter of the camera determines a projection relationship from three-dimensional space to a two-dimensional image. This is related only to the camera. A small hole imaging model is used as an example, image distortion is not considered. The intrinsic parameter may include scale factors of the camera in two coordinate axes u and v of the image coordinate system, coordinates ($x_0$, $y_0$) of a principal point relative to an imaging plane coordinate system, and a coordinate axis tilt parameter s. The u axis scale factor is a ratio of a physical length of each pixel in an x direction of the image coordinate system to a camera focal length f, and the v axis scale factor is a ratio of a physical length of a pixel in a y direction of an image coordinate system to a camera focal length. If image distortion is considered, the intrinsic parameter may include scale factors of the camera in two coordinate axes u and v directions of the image coordinate system, coordinates of a principal point relative to an imaging plane coordinate system, a coordinate axis tilt parameter, and a distortion parameter. The distortion parameter may include three radial distortion parameters and two tangential distortion parameters of the camera.

The world coordinate system, also referred to as a measurement coordinate system or an objective coordinate system, is a three-dimensional rectangular coordinate system, and may be used as a reference to describe three-dimensional locations of the camera and a to-be-measured object. The world coordinate system is an absolute coordinate system of the objective three-dimensional world, and a coordinate value of the world coordinate system is generally represented by Pw (Xw, Yw, Zw). In this embodiment of this application, a cockpit coordinate system may be used as the world coordinate system.

The imaging plane coordinate system, namely, the image coordinate system, uses a center of an image plane as a coordinate origin, the X axis and the Y axis are respectively parallel to two vertical sides of the image plane, and a coordinate value of the imaging plane coordinate system is generally represented by P (x, y). A physical unit (for example, millimeter) is used to represent a location of a pixel in an image in the image coordinate system.

A pixel coordinate system is an image coordinate system in pixels. An upper left corner vertex of the image plane is used as an origin, an X axis and a Y axis are respectively parallel to the X axis and the Y axis of the image coordinate system, and a coordinate value of the pixel coordinate system is generally represented by p (u, v). The pixel coordinate system represents a location of a pixel in an image in pixels.

A pinhole camera model is used as an example, the coordinate value of the pixel coordinate system and the coordinate value of the camera coordinate system meet a relational expression (2):

$$Z_c \begin{bmatrix} u \\ v \\ 1 \end{bmatrix} = K \begin{bmatrix} X_c \\ Y_c \\ Z_c \\ 1 \end{bmatrix} \qquad (2)$$

Herein, (u, v) represents coordinates of an image coordinate system in pixels, (Xc, Yc, Zc) represents coordinates in the camera coordinate system, and K represents a matrix of the camera intrinsic parameter.

A digital model of a cockpit environment includes content such as locations of all objects (for example, a HUD, a physical button, a steering wheel, and a seat) in a cockpit of a vehicle in a pre-selected reference coordinate system, and a layout of the cockpit environment. The digital model is a known model, and is equivalent to a cockpit environment map in the reference coordinate system. In this embodiment of this application, the pre-selected reference coordinate system is the cockpit coordinate system. In specific application, the reference coordinate system may be customized or flexibly selected as required.

A key point is a joint point and/or a feature point that may represent a human body motion or pose, and may be customized. For example, a key point of a hand may include a bone node of a finger, a fingertip of a finger, a connection point between a finger and a palm, a wrist joint point at a junction between the hand and an arm. A key point of the arm may include a connection point (may also be referred to as a rear arm joint point) between an arm and a torso, an elbow joint point, a wrist joint point (may also be referred to as a forearm joint point) at a junction between an arm and a hand, and the like.

A joint point is a bone joint point that may be used to form a skeleton line or a customized body node. In this embodiment of this application, a 3D location of the joint point may be represented by a 3D location of a center point (referred to as a joint center point below) of the joint point.

An upper limb joint point, namely, a joint point included in an upper limb, may be freely selected as required. For example, the upper limb joint point may include: a connection point between an upper limb and a head, a bone node at a root of a rear arm, an elbow bone node, a wrist bone node, and a hand joint point. In specific application, the upper limb joint point may be identified by using a preset joint point number or in another similar manner, and a 3D location of the upper limb joint point may be represented by using three-dimensional coordinates of the upper limb joint point in the cockpit coordinate system.

The hand joint point, namely, a joint point included in a hand, may be freely selected as required. In this embodiment of this application, a wrist is used as a start point of the hand, and a fingertip is used as an end point. For example, there may be 16 joint points of the hand: a wrist bone node, three bone nodes from the root of a little finger to the fingertip of the little finger, three bone nodes from the root of a middle finger to the fingertip of the middle finger, three bone nodes from the root of a ring finger to the fingertip of the ring finger, three bone nodes from the root of an index finger to the fingertip of the index finger, and three bone nodes from the root of a thumb to the fingertip of the thumb. In specific application, the hand joint point may be identified in a manner, for example, a bone node number or a finger number and a bone node number.

A fingertip location is a 3D location at the top of the finger. In embodiments of this application, the fingertip location may be represented by a 3D location of a fingertip joint point or a 3D location of a selected point at a fingertip in a finger external contour (for example, a center point of a fingertip curved surface) indicated by a 3D mesh of the hand.

A 3D location may be represented by coordinates in a pre-selected three-dimensional space coordinate system. In this embodiment of this application, the 3D location may be represented by using three-dimensional coordinates of the cockpit coordinate system.

A point cloud is a data set of points in the pre-selected space coordinate system, and data of each point includes information such as three-dimensional coordinates, a color, an intensity value, and time of the point. In this embodiment of this application, the space coordinate system corresponding to the point cloud data is the cockpit coordinate system, and a data format of the point cloud may be (x, y, z).

A three-dimensional (three-dimensional, 3D) mesh is to use a stereo mesh to represent three-dimensional space, and information stored in each mesh (mesh) includes a distance from a mesh to an object surface. In this embodiment of this application, the information stored in each mesh in the 3D mesh is a distance from the mesh to an origin of a pre-selected reference coordinate system. The reference coordinate system may be, but is not limited to the cockpit coordinate system of the vehicle. A mesh shape in the 3D mesh may be customized, for example, may be a triangle, a polygon, or another shape.

Mesh (mesh) data may include point information (for example, three-dimensional coordinates of a point), line information (for example, which two points are connected), and surface information (for example, a surface includes which points and lines or includes which vertices). The mesh data may be used to restore an object contour and an object surface. In this embodiment of this application, the mesh data may be obtained based on key point data extracted from a first image and by using a model such as a neural network, or may be obtained by meshing the point cloud data according to a surface reconstruction algorithm.

A 3D mesh body is a 3D object model represented by using the 3D mesh. For example, a 3D mesh body of a human body part is a 3D body part model represented by using the 3D mesh. For example, in this embodiment of this application, the 3D mesh body may include a 3D contour feature of the body part, or include both a 3D contour feature of a body part and the 3D location of the joint point.

A first 3D mesh is a 3D mesh obtained by meshing the point cloud data, and can restore an object surface. For example, in this embodiment of this application, the first 3D mesh data may be obtained according to the surface reconstruction algorithm.

A second 3D mesh, may also be referred to as a 3D mesh with a joint point, is a 3D mesh obtained based on key point data extracted from a 2D image and the first 3D mesh data. The second 3D mesh may restore an object surface and an inner node of the object. In this embodiment of this application, an object is a specific body part of a person, and the second 3D mesh may restore a 3D contour and an internal joint point of the specific body part.

Parameterized human body model is a human body model defined based on a constraint parameter, and a 3D structure of a human body can be reconstructed based on the model by using data. For example, in this embodiment of this application, the 3D structure of the human body may be represented by using the 3D mesh.

Parameterized human hand model is a human hand model defined based on a constraint parameter, and a 3D structure of a human hand can be reconstructed based on the model by using data. For example, in this embodiment of this application, the 3D structure of the human hand may be represented by using the 3D mesh.

A skinned multi-person linear (Skinned Multi-Person Linear, SMPL) model is a parameterized three-dimensional model of a human body, and can accurately represent different shapes (shape) and poses (pose) of the human body. The SMPL is a learnable model that can better fit the shapes and deformation in different poses of the human body through training. Input data of the SMPL includes a shape parameter and a pose parameter, and output data includes locations of 6980 vertices and locations of 23 joint points. The shape parameter (shape parameters) is used to describe a shape of a person. A value of each dimension represents an indicator of the human body shape, for example, a height or a weight. Generally, the shape parameter has values of 10 dimensions, and the value of each dimension represents an indicator of the human body shape. The pose parameter (pose parameters) is used to describe a motion pose of the human body at a moment, and generally has value of $24 \times 3$ dimensions. "24" represents 24 predefined human body joint points, and "3" represents an axis-angle expression of a human body joint point relative to a rotation angle of a parent node of the human body joint point. For the 24 human body joint points, a group of joint point trees are predefined. A process in which the SMPL model synthesizes a digital human body model can be divided into the following three stages: shape-based mixed shaping, pose-based mixed shaping, and skinning. The SMPL can simulate a protrusion and a depression of a human muscle in a process of movement of a limb. Therefore, surface distortion of the human body in the process of movement can be avoided, and a shape of a muscle stretching and a contraction movement of the human body can be accurately depicted.

A sparse trained articulated human body regressor (Sparse Trained Articulated Human Body Regressor, STAR) model is a model that is improved based on the SMPL model. Each joint point affects only a vertex around the joint point. Compared with the SMPL model, the STAR model has a smaller parameter scale and better generalization performance.

A hand model with articulated and non-rigid deformations (Hand Model with Articulated and Non-rigid deformations, MANO) is a prior parameterized human hand model. This may be used as a part of the SMPL model or may be used independently. This may simulate a protrusion and a depression of a human hand muscle in a process of movement of a limb. Therefore, surface distortion of the human hand in the process of movement may be avoided, and morphology of a muscle stretching and a contraction movement of the human hand can be accurately depicted. The MANO divides a human hand mesh into two parts: a shape and a posture. A shape part is mainly used to model an attribute of the human hand, for example, a diameter and length of the finger or a thickness of the palm. A posture part determines how a three-dimensional curved surface is deformed through the joint.

Kalman filtering (Kalman filtering) is an algorithm that uses a linear system state equation, inputs or outputs observation data through a system, and performs optimal estimation on a system state. Because the observation data includes effects of noise and interference in the system, an optimal estimation process may also be considered as a filtering process. A typical example of the Kalman filtering is to predict a coordinate location and a velocity of an object from a group of limited, noise-containing observation sequences for the object location.

A Hungarian algorithm is a combinatorial optimization algorithm to resolve a task assignment problem in polynomial duration.

The surface reconstruction (surface reconstruction) algorithm is a method, based on discrete sampling points or polygonal mesh data, uses curved surface fitting, to generate a target curved surface.

A Crust algorithm is an algorithm that performs three-dimensional reconstruction for discrete points based on the Voronoi (Voronoi) diagram and Delaunay (Delaunay) triangulation method. A key idea is to input a group of point cloud data, obtain a central axis of an object by calculating the Voronoi diagram of the point cloud, and obtain an object surface by transforming the central axis, to complete reconstruction of a point cloud model. The Crust algorithm has low requirements on a quality and form of the point cloud, including point cloud density (point spacing), divergence (uniformity), surface integrity, and the like. The Crust algorithm is highly automated, and does not need excessive manual intervention. This avoids operations such as filling a hole or processing an intersecting surface in a later phase of many algorithms or related software of the same type.

The Voronoi diagram, also known as a Voronoi or Dirichlet diagram, includes a group of continuous polygons consisting of vertical bisectors of straight lines each obtained by connecting two adjacent points. P = {$p_1$, $p_2$, $p_3$, ..., $p_s$} is a set of s discrete points in n-dimensional space. A complete Voronoi diagram should include a plurality of Voronoi polygons. A mathematical expression form of an $i^{th}$ Voronoi polygon is shown in Formula (3):

$$V_i = \left\{ x \in R^n : \|x - p_i\| \leq \|x - p_j\|, j = 1, 2, ..., n, i \neq j \right\} \quad (3)$$

In Formula (3): $\|x - p_i\|$ indicates a Euclidean distance between a point x and a node $p_i$ in a plane domain. In addition, $V(P) = Y_{i=1}^{s} V_i$, and V(P) is referred to as a Voronoi diagram of a point set P.

In the Delaunay triangulation, P = { $p_1$, $p_2$, $p_3$, ..., $p_s$ } is a set of s discrete points in n-dimensional space, e is a line segment obtain by connecting two points $p_i$ and $p_j$ in the point set, and E is a set of e. If a circle passing through two points $p_i$ and $p_j$, and does not include any point in the point set P in the interior of the circle, e is a Delaunay edge. If the triangulation of the point set P includes only the Delaunay edge, the triangulation is referred to as the Delaunay triangulation. The Delaunay triangulation has two important properties: minimum angle maximization and hollow circle.

Geodetic distance is a length of a shortest path between two points in three-dimensional space.

An iso-surface is a curved surface in space. A value of a function F(x, y, z) on the curved surface is equal to a given value V, namely, a curved surface formed by S = {(x, y, z): F(x, y, z) = V}. An iso-surface technology is widely used in visualization, and many visualization problems of a scalar field can be summarized as extraction and drawing of the iso-surface, such as an iso-potential surface, an iso-pressure surface, or an isothermal surface.

The Morse (Morse) function is an important function in differential topology. It is assumed that M is a smooth three-dimensional manifold, and f: M->R is a smooth function. The gradient of f at a point p is calculated. If the three components in the foregoing formula are all 0, p is a critical point of f. Otherwise, p is a regular point. Based on the Hessian (Hessian) matrix of f at the critical point p, if the matrix H(p) is reversible (that is, a determinant value is not equal to 0), p is a non-degenerate critical point; otherwise, p is a degenerate critical point. If all critical points of f are non-degenerate critical points and function values at all critical points are not equal, f is referred to as the Morse function.

A level set is a mathematical abstraction of a contour line or a contour surface. It is assumed that the function f is A→R, A ⊆ Rn. For a constant c, a set {x □ A|f(x) = c} is referred to as a level set c of f, which is referred to as a level set. When n is 2 or 3, the level set is usually a curve or curved surface, which is referred to as an iso-line (also referred to as contour line) or an iso-surface (also referred to as contour surface).

The RingNet is an end-to-end neural network model that can be used for three-dimensional reconstruction based on a single image. For example, 3D face reconstruction may be performed based on a given single face image. For another example, three-dimensional data including a neck and an entire head may be reconstructed based on a single image.

A driver monitoring system is a system that monitors a status of a driver in a vehicle based on an image processing technology and/or a voice processing technology, and is mainly used to ensure driving safety and improve driving experience.

A cockpit monitoring system detects an entire cabin environment in real time, to improve passenger safety and comfort. This system may provide functions such as a quantity of passengers in the cockpit report, passenger recognition, pose analysis, and object detection, to enable a vehicle system to learn about cabin conditions.

A panoramic image system is an auxiliary system through which panoramic fused real-time image information around a vehicle may be viewed through a vehicle-mounted display.

Gesture recognition based on a TOF camera: A principle of the gesture recognition based on the TOF camera is to perform filtering by using depth information and background information of the TOF camera to extract a hand contour, and then perform classification and gesture type and track recognition based on the hand contour. This technology is widely used in the vehicle, and in this technology, a light, a chair, an air conditioner, and the like in the vehicle may be controlled by using gestures. Defects of the technology are that, due to factors such as limited resolution of the TOF camera, a long distance between a hand of a driver and a TOF lens, and information indicating that a hand that makes a gesture does not directly face the lens of the TOF camera, in the technology, it is difficult to accurately recognize a gesture, and can only recognize a gesture type, and high-precision control of a gesture and recognition of a fingertip-level location and a pointing angle are difficult to implement.

Performing gesture recognition based on a binocular camera, namely, a binocular gesture recognition technology: A principle thereof is to match points at a same location of a hand based on a view angle difference, to obtain 3D depth information of an image according to a triangle range measurement principle, and then perform refined modeling on a 3D contour of the hand based on the 3D depth information in combination with high-definition resolution of a 2D image, so as to implement gesture recognition. Compared with the gesture recognition technology based on the TOF camera, this method can fuse different location information, and may achieve high precision in a well-illumination environment. The technology has the following defects: In strong light or dark light conditions, precision may be lost due to light compensation problems or excessively dark local details. This problem may be inevitable even when an IR camera is used. In a case of partial shielding, a gesture may also be incorrectly recognized due to inconsistency of left and right imaging. In addition, when the technology is used to obtain a high-precision recognition result, a point-by-point alignment matching algorithm needs to be used, which causes high computing power overheads, and has a high requirement on both storage performance and computing performance of hardware. Some hardware devices may not support this.

In view of this, embodiments of this application provide an improved gesture recognition method and apparatus, a device, a system, a computer-readable storage medium, and a vehicle. A principle thereof is to perform comprehensive inference based on a key point in a first image and a 3D point cloud in a second image in combination with a first machine learning model (namely, a parameterized model), to obtain a refined first 3D feature (for example, a 3D mesh body), and fingertip-level gesture motion information can be obtained based on the first 3D feature. Therefore, the fingertip-level gesture motion information corresponds to a specific function or an interaction object, so that fingertip-level high-precision control may be implemented. This makes gesture control and gesture-based human-machine interaction more accurate, efficient, simple, convenient, flexible, safe, and reliable, and is applicable to a vehicle cockpit environment that has a high requirement on accuracy and security of gesture control.

Embodiments of this application are applicable to various scenarios in which human-machine interaction is required, and specifically, embodiments of this application are particularly applicable to a cockpit environment of a traffic tool such as a vehicle or aircraft, for example, human-machine interaction between a driver and a vehicle-mounted device in a vehicle driving process. Certainly, embodiments of this application are further applicable to a scenario in which human-machine interaction needs to be frequently performed, for example, a conference or a smart home, and a requirement on accuracy, security, reliability, and the like of a human-machine interaction operation is high.

The "vehicle" in embodiments of this application includes any traffic tool applicable to embodiments of this application. For example, the "vehicle" herein includes but is not limited to a private car, a bus, a passenger vehicle, a high-speed railway, a subway, and the like. A power type of the "vehicle" may be fuel driving, pure electric, hydrogen fuel cell driving, hybrid power, or the like. In addition, the "vehicle" herein may be a man-driven vehicle, an autonomous vehicle, or any other type of vehicle. A person skilled in the art may understand that any traffic tool having a cockpit may be considered as the "vehicle" in embodiments of this application.

It should be noted that the user in this embodiment of this application is a sender of a gesture motion.

The following describes an example of a specific implementation of the gesture recognition method in embodiments of this application.

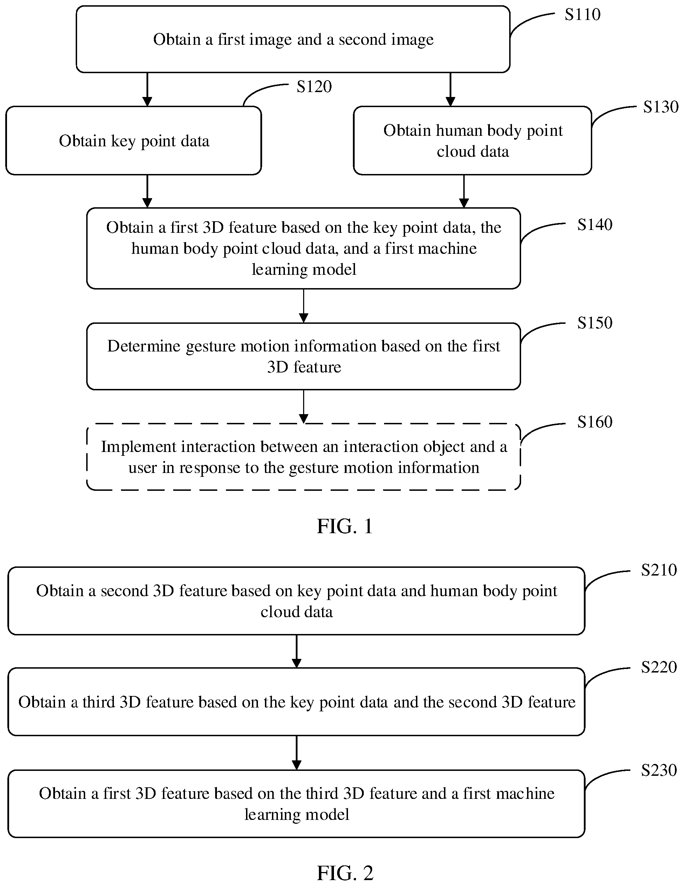

FIG. 1 shows an example of a procedure of a gesture recognition method according to an embodiment of this application. As shown in FIG. 1, the example of the procedure of the gesture recognition method according to this embodiment of this application may include the following steps.

S110: Obtain a first image and a second image, where the first image and the second image include a body part related to a gesture motion.

In embodiments of this application, the first image and the second image are synchronous. In other words, the first image and the second image correspond to a same scenario at a same moment. Alternatively, if a time difference between a shooting time point of the first image and a shooting time point of the second image is less than or equal to a preset threshold, it may be approximately considered that the first image and the second image correspond to a same scenario at a same moment. Herein, the scenario may be but is not limited to an internal scenario of a vehicle cockpit.

To prevent a first 3D feature from losing a hand detail, the first image may be but is not limited to a high-resolution RGB image or IR image. The second image may be but is not limited to a TOF image or another similar image.

Scenario content included in the first image and the second image may be the same or different. To enable the first image and the second image to incorporate as many details of a user body in the scenario as possible, the first image and the second image may be collected at different angles. In actual application, the first image may be collected by using a first camera below, and the second image may be collected by using a second camera below. Content in the first image and the second image may be flexibly controlled by adjusting installation locations and installation angles of the first camera and the second camera.

In some embodiments, the first image may be obtained at a first preset angle by using the first camera, and the second image may be obtained at a second preset angle by using the second camera. In some examples, when the gesture motion is performed, a hand is located in a gesture effective area of the vehicle cockpit. In this case, the first image may be collected in a manner in which the first camera faces the gesture effective area at the first preset angle, and the second image may be collected in a manner in which the second camera faces the gesture effective area at the second preset angle.

The first preset angle and the second preset angle may be the same or different. In some embodiments, the first preset angle may be 0, and the second preset angle may be a top-view angle less than 90 degrees. To be specific, an optical axis of the first camera is parallel to or coincides with an axis of the gesture effective area, and an optical axis of the second camera is at an acute angle less than 90 degrees with the axis of the gesture effective area. In other words, the first camera directly faces the gesture effective area, and the second camera overlooks the gesture effective area at a preset angle. In this way, the first image includes more body details of a user, and these body details are clear. For example, in addition to a hand (the hand includes a palm, a wrist, and all fingers) that performs the gesture motion, the first image may further include another part of an upper limb, like a shoulder, a rear arm, an elbow, a forearm, or a wrist. In addition, when a field of view (Field of View, FOV) of the second camera is small, the second camera may also comprehensively collect as many hand details and another possible detail as possible. In this way, the first image includes an upper limb part, so that a human body detail of the first 3D feature is more complete. In addition, precision of the hand detail of the first 3D feature can be further improved through mutual constraint between parts of the upper limb part. This helps obtain high-precision gesture motion information (for example, fingertip-level gesture motion information) and facilitates quickly and accurately inferring a user intention based on an upper limb pose of the first 3D feature, to obtain precise first indication information. The first indication information indicates whether the gesture motion is effective or ineffective.

Herein, the gesture effective area is pre-selected. In specific application, gesture recognition may be enabled by detecting whether the hand of the user is in the gesture effective area. In some embodiments, after it is detected that the hand of the user is in the gesture effective area and a predetermined start gesture motion is performed, gesture recognition is enabled.

For example, after step S110, the method may further include: detecting whether the hand in the first image and/or the second image is located in the preset gesture effective area and whether the predetermined start gesture motion is performed, to determine whether to enable gesture recognition. Specifically, if a hand in the first image and/or the second image is in the gesture effective area and the predetermined start gesture motion is performed by the hand, gesture recognition is enabled. If neither the first image nor the second image includes a hand, or the hand does not in the gesture effective area, or the hand does not perform the predetermined start gesture motion, gesture recognition is not enabled, and step S 110 is repeated until the foregoing condition is met. In this way, mistaken triggering of gesture recognition can be effectively avoided, to save computing resources and improve processing efficiency.

In some embodiments, the first image and/or the second image may include the upper limb part related to the gesture motion. In an embodiment, the upper limb part may include an arm and a hand that perform the gesture motion, so that the first 3D feature may simultaneously include features of the arm and the hand that perform the gesture motion. This helps obtain the user intention based on poses of the arm and the hand, thereby obtaining high-precision gesture motion information including the first indication information. In another embodiment, the upper limb part included in the first image and/or the second image may further include another arm and hand in addition to an arm and a hand that perform the gesture motion. In this way, the first 3D feature may simultaneously include features of two arms and two hands, and because of mutual constraint between the arms and the hands, details and features (for example, a 3D location of a joint point) of the arm and the hand that perform the gesture motion are more accurate, so that a user pose can be more accurately and comprehensively learned, to more accurately infer the user intention and obtain higher-precision gesture motion information that includes the first indication information. In addition, the first image and/or the second image may further include details of other more body parts, like a head and a neck. This is not limited in this specification.

Step S120: Obtain key point data of the body part based on the first image.

Obtaining the key point data in step S120 may be implemented by using various key point extraction algorithms applicable to embodiments of this application. For example, the first image may be processed by using an existing machine learning model that can extract key point data from the first image, to obtain the key point data of the body part corresponding to the gesture motion.

In some embodiments, step S 120 may include: first inferring the key point data in a full image range of the first image, where the key point data includes the key point data of the body part; positioning a hand area of the first image based on a wrist location in the key point data; and if the hand area belongs to the preset gesture effective area, obtaining hand key point data of the user through inference from the hand area of the first image. In this embodiment, a key point of the user is first inferred from the first image, and then a hand key point of the user is obtained through inference in a small range, so that the key point data of the user can be extracted comprehensively and efficiently, high-precision hand key point data is extracted, and a key detail of the hand, especially a related detail of the hand that performs the gesture motion, may not be lost. This provides strong data support for obtaining the high-precision first 3D feature in step S140.

In some examples, if a plurality of groups of key point data are obtained through inference in the full image range of the first image, only one group of key point data in which a wrist location is in the gesture effective area may be retained. The group of key point data is the key point data of the user. The hand area of the first image is positioned based on the wrist location in the group of key point data. Key point data other than the group of key point data is ineffective data and may be discarded.

Herein, the key point data may indicate a 2D location of the joint point of the body part. When the first image is collected by using the first camera, the 2D location of the joint point may be represented by using two-dimensional coordinates of a pixel coordinate system of the first camera. In some embodiments, data of each key point may include content such as a node ID, two-dimensional coordinates, shielding information, and confidence. The shielding information indicates whether a corresponding key point is shielded. The node ID may be but is not limited to a preset bone node number or another identifier, and may indicate a human bone node corresponding to the key point. The two-dimensional coordinates are two-dimensional coordinates in the pixel coordinate system of the first camera. The confidence indicates a reliability degree of the key point data.

In some embodiments, the key point data may be represented by using a tree structure. Each node in the tree structure represents a key point, and an association relationship between nodes represents a connection relationship between key points. The tree structure may be used to record information about each key point and a relationship between the key points, to more accurately and comprehensively describe a case of an internal joint point of a body part.

Step S130: Obtain human body point cloud data based on the second image.

The human body point cloud data may be extracted from the second image by using various applicable algorithms. In some embodiments, the human body point cloud data may be directly extracted from the second image by using an existing machine learning model or algorithm. In some embodiments, step S130 may include: first filtering the second image, to remove noise from the second image, and then performing classification of a person and a background on point cloud data in the second image through clustering, to remove point cloud data of the background, so as to finally obtain the human body point cloud data. In this way, after filtering and distinguishing between the person and the background, the point cloud data of the background like a seat interior decoration may be removed, and noise interference may be eliminated, to obtain point cloud data of all persons (for example, a driver and/or a passenger) in a corresponding scenario (for example, a cockpit scenario of the vehicle). The human body point cloud data obtained in this way has less noise and high precision.

In some embodiments, the human body point cloud data may represent a contour feature and a surface feature of a human body and an accessory clothing of the human body, and provide data support for obtaining the first 3D feature in subsequent step S140.

Step S140: Obtain the first 3D feature based on the key point data, the human body point cloud data, and a first machine learning model, where the first 3D feature includes a 3D contour feature of the body part.

Herein, the first machine learning model is a prior parameterized model, and the parameterized model may include but is not limited to a parameterized human body model and a parameterized human hand model. For example, the parameterized human body model may be but is not limited to a model, for example, an SMPL model or a STAR model, and the parameterized human hand model may be but is not limited to a MANO model.

Herein, the first 3D feature is data indicating a feature like an external contour of the body part. In some embodiments, the first 3D feature may further include a 3D location of the joint point of the body part. In some examples, the 3D location of the joint point in the first 3D feature may be a second 3D location obtained in the following manner shown in FIG. 2 or a 3D location of the joint point obtained in another manner other than the manner shown in FIG. 2 (for example, a 3D location of the joint point obtained by importing a second 3D feature and mesh data of the key point data into the first machine learning model for human body reconstruction and human hand reconstruction). For example, the first 3D feature may be but is not limited to a 3D mesh body, and the 3D mesh body may include a 3D contour feature of the body part and a 3D location of the joint point of the body part.

In some embodiments, FIG. 2 shows an example of a specific implementation procedure of step S140. As shown in FIG. 2, the example of the specific implementation procedure of step S140 may include the following steps:

Step S210: Obtain the second 3D feature based on the key point data and the human body point cloud data.

In some embodiments, the second 3D feature may be obtained based on the human body point cloud data that matches the key point data, namely, the human body point cloud data of the user. The second 3D feature includes the 3D contour feature of the body part. For example, the second 3D feature may be, but is not limited to, the following first 3D mesh.

In some embodiments, if the second image includes human body point cloud data of two or more persons, the human body point cloud data of the user may be extracted herein based on the key point data obtained in step S120, and the second 3D feature is obtained by meshing the human body point cloud data of the user.

Step S220: Obtain a third 3D feature based on the key point data and the second 3D feature, where the third 3D feature includes the 3D contour feature of the body part and a first 3D location of the joint point of the body part.

In some embodiments, in step S220, the key point data and the second 3D feature may be fused to obtain the third 3D feature. Before fusion, the 2D joint point represented by the key point data and the body part contour represented by the human body point cloud data are independent of each other. Through fusion in this step, the 2D joint point has depth information, becomes a 3D joint point, and then is wrapped by a 3D contour, so that the third 3D feature including the 3D joint point is obtained. The third 3D feature includes both the 3D contour feature of the body part and the first 3D location of the joint point of the body part.

In some examples, the third 3D feature may be, but is not limited to, the following second 3D mesh.

Step S230: Obtain the first 3D feature based on the third 3D feature and the first machine learning model, where the first 3D feature includes the 3D contour feature of the body part and the second 3D location of the joint point of the body part.

In some embodiments, human body reconstruction and human hand reconstruction are performed based on the third 3D feature and the first machine learning model, to obtain the first 3D feature. In this way, the first 3D feature may include both a refined 3D contour feature of the body part and the second 3D location of the joint point. After processing by using the first machine learning model, the second 3D location is more accurate than the first 3D location. In addition, the 3D contour feature of the body part in the first 3D feature not only includes a shape of a 3D contour, but also may include a surface feature (for example, skin morphology) of the 3D contour. It can be learned that the first 3D feature obtained by performing step S210 to step S230 has a high-precision feature and complete details of the body part.

In step S210 to step S230, the first machine learning model is introduced. Because the first machine learning model may include various human body parameters such as constraint of joints of a plurality of human body parts and approximate size ranges of external contours thereof (for example, a rear arm width, an arm length, a forearm width, a wrist width, and a palm width), 3D reconstruction is performed in combination with various human body information such as the constraint of joints of a plurality of body parts and the approximate size ranges of body parts in the first machine learning model instead of being only limited to information or parameters of a specific body part or some specific body parts (for example, the hand). The arm and the hand may be fitted by using more curved surface meshes, so that a refinement degree and data accuracy of the first 3D feature may be improved, and the 3D location of the joint point in the first 3D feature may be more consistent with a real status of a human body, to avoid a case that is not in line with a real human body state, for example, a center point of a wrist joint is outside a wrist contour, a center point of a wrist joint is positioned in a middle segment of the forearm, or a thumb joint point is positioned between a thumb and an index finger. Therefore, information such as an overall pose of the body part, a hand pose, a finger pose, and a fingertip location may be quickly and accurately inferred based on the first 3D feature.

It should be noted that the example of an implementation procedure shown in FIG. 2 is merely an example. In actual application, there are a plurality of manners of obtaining the first 3D feature. For example, the second 3D feature of the user may be first obtained based on meshed human body point cloud data, the mesh data of the key point data is obtained by using a neural network model and the like, and then the second 3D feature and the mesh data of the key point data are imported into the first machine learning model (for example, a parameterized human body model and a parameterized human hand model) for human body reconstruction and human hand reconstruction, to finally obtain the first 3D feature.

In some embodiments, step S230 may specifically include the following steps. Step a1: Determine a reconstruction parameter (for example, a model parameter used for human body reconstruction and human hand reconstruction below) based on key point data unused for the third 3D feature, the third 3D feature, and the first machine learning model. Step a2: Perform human body reconstruction and human hand reconstruction based on the reconstruction parameter and the first machine learning model, to obtain the first 3D feature. In this way, when some details of the body part may be lost in the second image, details of the body part (especially the hand) may still be restored, and a gesture recognition failure, recognition error, or misrecognition caused by a fact that the hand moves out of a field of view (FOV) of the second camera in a continuous gesture execution process can be avoided. In addition, when the hand performing the gesture motion is shielded (including self-shielding and other-shielding) (for example, the hand performing the gesture motion is shielded by an arm or another body part of the user or the hand performing the gesture motion is shielded by a steering wheel or another passenger in the cockpit), and the key point data in the first image may be further used to compensate for a shielded part, to restore details of shielded parts in other parts of the hand and/or the upper limb part, so as to achieve an objective of accurately restoring hand details.

Herein, the key point data unused in the third 3D feature may include but is not limited to key point data outside the field of view of the second camera, key point data in which an error occurs in step S220, and the like. Specifically, because shooting angles and fields of view of the first camera and the second camera are different, in step S220, some key point data in the first image may not be projected to the second 3D feature constructed based on the second image, and the key point data in which an error occurs in step S220 is the key point data that may not be projected to the second 3D feature.

In step S230, the key point data is applied to human body reconstruction and human hand reconstruction, so that not only a part that may be lost in the first 3D feature can be supplemented, but also a human body-related part (especially the hand) may be restored from multi-angle and multi-orientation, to further improve integrity and data accuracy of the first 3D feature.

Before step S140, the method may include: projecting the key point data from the first image and the human body point cloud data from the second image into a predetermined coordinate system based on relative locations and calibration information of the first camera and the second camera, to implement registration of the key point data and the human body point cloud data, so as to be directly used in step S140. Therefore, the key point data and the human body point cloud data may be incorporated into same space, to improve processing efficiency and accuracy of step S140. The vehicle cockpit is used as an example. The predetermined coordinate system is a pre-selected world coordinate system, and may be a cockpit coordinate system of the vehicle or another vehicle coordinate system. A vehicle cockpit environment is used as an example, the key point data and the human body point cloud data may be projected to the cockpit coordinate system of the vehicle, to complete registration. In some embodiments, the projection may be implemented by using the foregoing Formula (1) and Formula (2).

Step S150: Determine gesture motion information of the user based on the first 3D feature (for example, the 3D mesh body described above).

In this embodiment of this application, the gesture motion information may include gesture motion information related to a fingertip. Specifically, the gesture motion information may include but is not limited to one or any combination of the following: first indication information, fingertip falling point information, finger pointing direction information, fingertip movement track information, gesture type information, and hand movement track information. For example, refined fingertip-level gesture motion information such as a finger fingertip track and finger pointing direction information may be accurately calculated based on a first 3D feature of a single frame of image or a relationship between first 3D features of a plurality of frames of images.

A problem that is difficult to be resolved in gesture recognition is a problem of misrecognition of a gesture. A gesture that does not have a user intention but is very similar to a gesture that has a user intention is often recognized as a gesture command of the user, resulting in mistaken triggering and poor user experience. In an embodiment of this application, the user intention may be determined based on the first 3D feature, to obtain the first indication information that may indicate whether the user has a real intention to perform the gesture motion. Therefore, based on the first indication information, a case in which "a hand motion of the user is misrecognized as a gesture command when the user does not have a user intention" or the like can be eliminated, to improve accuracy of gesture recognition.

In this embodiment of this application, the first indication information may indicate whether the gesture motion is effective or ineffective. In some embodiments, the first indication information may indicate a user intention of the gesture motion, that is, indicate whether the user has an intention of executing the gesture motion. In some examples, the first indication information may be represented by using indicative value information. For example, the first indication information may be represented by setting a default value like "0" or "1". When a value of the first indication information is "0", it indicates that the user is not making a gesture, or it indicates that a made gesture motion is not used for an objective of gesture control or human-machine interaction, that is, the gesture motion is ineffective. When a value of the first indication information is "1", it indicates that the user is making a gesture and the made gesture is used for an objective of gesture control or human-machine interaction, that is, the gesture motion is effective. Therefore, the first indication information with a small amount of data is added to the gesture motion information, misrecognition may be effectively avoided, gesture recognition accuracy may be improved, and user experience may be effectively improved.

In some embodiments, one or more of user information (for example, a user location and a user identity) of the gesture motion, a pose of the body part, and a movement track of the body part may be obtained based on the 3D location of the joint point in the first 3D feature, and then the first indication information of the gesture motion is obtained based on one or more of the user information, the pose of the body part, and the movement track of the body part. In this way, the first indication information and other gesture motion information may be simultaneously and accurately obtained based on the first 3D feature.

In some examples, the pose of the body part is represented by a joint point connection line (namely, a skeleton line of the body part) obtained based on 3D locations of joint points. Whether the user is making a gesture may be accurately determined based on the pose of the body part of the user, to obtain accurate first indication information.

In some examples, the movement track of the body part may be obtained by tracking a change of the 3D location of the joint point. The arm is used as an example. A pose of the arm may be represented by a connection line of joint points of the rear arm, the elbow, the forearm, the wrist, and the like. The pose of the arm is a pose presented by the connection line. A facing direction and a movement track of the arm may be learned by tracking a change of the connection line and an endpoint direction of the connection line. A user intention may be determined based on the facing direction and the movement track of the arm, to accurately obtain the first indication information. For example, if the driver lifts the hand and puts the hand in an effective area of gesture recognition and maintains, it may be considered that a real intention of the driver is to execute the gesture, and the first indication information indicating that the gesture motion is effective is obtained. A human body behavior recognition model is used to determine whether the arm motion is a gesture motion. If the arm motion is not a gesture motion, for example, drinking water or making a call, the arm motion is considered as a non-intentional behavior. If the arm motion is a gesture motion, the arm motion is considered as an intentional behavior. In the intentional behavior, if the user does not perform another behavior (like smoking, drinking water, or making a call), it may be determined that the user is making a gesture, and the first indication information indicating that the gesture motion is effective is obtained. In the non-intentional behavior, it is determined that the user is not making a gesture, and the first indication information indicating that the gesture motion is ineffective is obtained.

A vehicle cockpit scenario is used as an example. A pose of an upper limb of the user indicates that the user is controlling the steering wheel and indicates that the user is the driver. For another example, if the upper limb of the user is located in a driver area of the cockpit, it may be determined that the user is the driver. If the user is the driver, and it is found, by tracking a movement track of the upper limb of the user, that a motion of the user is consistent with a preset driver gesture motion, it may be determined that the user is making a gesture, and the first indication information indicating that the gesture motion is effective is obtained. If the user is not the driver, a location of the user in the cockpit is not a driver seat, or a motion of the user is not a gesture motion, it may be determined that the user is not making a gesture, and the first indication information indicating that the gesture motion is ineffective is obtained.

To adapt to a requirement of a specific application scenario, a personalized customization requirement, and a driving safety requirement, a gesture response may be performed in a targeted manner. In some embodiments, step S150 may further include: determining, based on one or any combination of the following: a cockpit location of the user, preset information of the user, an upper limb pose of the user, and an upper limb movement track of the user, whether to respond to the gesture motion. The cockpit location, identity information (that is, belongs to the driver or not), the upper limb pose, and the upper limb movement track may be obtained based on the first 3D feature. Therefore, a gesture response may be performed in a targeted manner based on the information obtained based on the first 3D feature, to meet an actual application requirement.

A vehicle cockpit scenario is used as an example, the following setting may be made: when it is determined that a user identity is the driver, responding to a gesture motion of the user; and when it is determined that the user is a passenger and is not the driver, not responding to a gesture motion of the user, or responding to a gesture motion of another passenger based on selection of the driver. In this way, a gesture of the driver may be preferentially responded to in gesture interaction of the vehicle cockpit, and a gesture of another person may be shielded. When the cockpit location of the user belongs to the driver seat, it is determined to respond to the gesture motion of the user. When the cockpit location of the user does not belong to the driver seat, it may be selectively determined whether to respond to the gesture motion.

For example, whether the user is located on the driver seat or a front passenger seat may be first determined based on the pose of the body part obtained based on the first 3D feature, whether the user intends to execute the gesture may be determined based on the facing direction and the movement track of the arm of the user, and an interaction object of the gesture of the user may be determined with reference to information like the finger pointing direction in the gesture motion information.

The fingertip falling point information may be a spatial location of a falling point of a fingertip of a target finger in the cockpit, and may be represented by using three-dimensional coordinates of the cockpit coordinate system. In an implementation, an intersection point between a digital model of the cockpit environment and an extension line of a connection line of a first joint point and a fingertip that are of a straightened finger (for example, the index finger) is determined based on the first 3D feature, and a location of the intersection point is used as the fingertip falling point information.

The finger pointing direction information may be an extension line direction of a connection line of a first joint point of the target finger and the fingertip of the target finger, and may be represented by a vector including three-dimensional coordinates of the first joint point and three-dimensional coordinates of the fingertip in the cockpit coordinate system. In an implementation, an extension line direction of a connection line of a first joint point and a fingertip that are of a straightened finger (for example, the index finger) is determined based on the first 3D feature, and the extension line direction is used as a finger pointing direction. The finger pointing direction information may be represented by using a space vector, the space vector may be represented by using a three-dimensional array, and the three-dimensional array includes three-dimensional coordinates of the first joint point and three-dimensional coordinates of the fingertip.

The fingertip movement track information may be a movement track of a fingertip of the target finger within predetermined duration. In an implementation, a fingertip 3D track point sequence of the user may be formed by using spatial locations of a fingertip of a finger that is in a stretching state and that is in the first 3D feature within predetermined duration, and fingertip track information of the user is extracted by using the fingertip 3D track point sequence of the user. The fingertip track information includes a direction, a shape, a speed, and the like of the fingertip track. Herein, the track direction may be directly calculated based on a vector direction of an adjacent track point. The 3D track point sequence may be represented by an array. For example, the fingertip movement track may represent gestures such as circle drawing, sliding, and dragging.

The gesture type information may be determined based on the hand pose indicated by the first 3D feature and a pre-constructed gesture library. In an implementation, the hand pose is compared with a preset gesture in the gesture library, and information about the preset gesture of which pose matches the pose of the hand pose is gesture type information of the hand pose. For example, some shortcut functions each may be triggered by using a separate gesture, and these gestures may be defined in the gesture library. In actual application, a plurality of preset gestures may be distinguished based on a finger key point and a fingertip track, to trigger various preset functions.

The gesture type may include but is not limited to a directional gesture, a track gesture, and the like. For example, to cooperate with determining of a finger falling point, the index finger may be used as a basis for determining a finger pointing direction (namely, the target finger). Therefore, a design of a directional gesture may be based on the index finger, including operations such as dragging in various directions, tapping in a depth direction, and confirmation in cooperation with another finger motion (for example, bending a thumb, and closing a ring finger and the index finger together), to implement functions such as selection, dragging and tapping. A motion of the track gesture may include but is not limited to up, down, left, or right movement, depth movement, finger bending or straightening, circle drawing, and the like.

The target finger may be a pre-specified finger (for example, the index finger or another finger that is considered convenient by the driver), or may be a finger that is currently in a stretching state. Similarly, a vehicle-mounted device or a physical button of the vehicle-mounted device or a manipulable item of a vehicle-mounted display at an intersection point of the extension direction of the finger pointing direction and the digital model of the cockpit environment is an interaction object in the finger pointing direction.

Refined interactive control such as dragging, tapping, sliding, and zooming out/in may be performed based on the gesture motion information. In some embodiments, the gesture recognition method in this embodiment of this application may further include the following step. Step S160: Implement interaction between the interaction object and the user in response to the gesture motion information. In specific application, the interaction object may be but is not limited to a vehicle-mounted device or a physically manipulable component (for example, a physical button, a switch, or another manipulable component) of the vehicle-mounted device, or an interface element (for example, a menu, a graph, a map, a virtual button, an option, a scroll bar, a progress bar, or a dialog box) of the vehicle-mounted display (for example, a HUD or a central control display). It may be understood that the vehicle-mounted device may further include a terminal device that is connected to the vehicle in a wired or wireless manner, for example, a mobile phone, a tablet computer, an intelligent wearable device, or a navigation device. A connection manner may be USB, Bluetooth, Wi-Fi, or near field communication (Near Field Communication, NFC). A type of the terminal device and a type of a connection manner are not limited in embodiments of this application.

In some embodiments, in step S160, when the first indication information indicates that the gesture motion is effective, interaction between the interaction object and the user is implemented based on the gesture motion information. In specific application, interaction between the interaction object and the user may include performing one or more of the following operations on the interaction object: dragging, tapping, zooming out/in, selecting, sliding, and moving. In this way, a control signal may be provided to a vehicle-mounted central control system to implement gesture control on the central control display or a HUD interface element.

For example, a finger may be used to point to any manipulable component in the vehicle, to display information on the HUD and perform adjustment with reference to a mouse function of a gesture.

For another example, after the finger pointing direction is determined, based on the digital model of the cockpit environment, a device on which the finger falling point locates, or even a specific part of the device, may be obtained. For example, the HUD is pointed to, and after a falling point on a user interface of the HUD is accurately calculated, the interface element of the HUD may be accurately controlled.

For another example, a gesture control signal may be directly generated based on a single piece of gesture motion information, and a preset function may be triggered based on a gesture type.

In embodiments of this application, high-precision fingertip-level control may be implemented. For example, a gesture may be used to control map zooming out/in, a round-view angle, or adjustment of various application program (APP) knob progress bars in a vehicle-mounted scenario. For another example, a falling point of the finger extension line on the HUD or the central control display may be inferred based on gesture motion information like a fingertip pointing direction, to perform more refined control (for example, tapping, dragging, selection, and moving) on an interface element on the HUD or the central control display.

The following describes in detail an example of a specific implementation of step S140.

The specific implementation procedure of step S210 may include: extracting the human body point cloud data of the user from the human body point cloud data; meshing the human body point cloud data of the user based on a surface reconstruction algorithm, to obtain the first 3D mesh (namely, the second 3D feature) of the user, where the first 3D mesh includes the 3D contour feature of the body part; and determining the first 3D location of the joint point of the body part based on the key point data and the first 3D mesh, to form the second 3D mesh (namely, the third 3D feature) of the user. Therefore, a joint point feature represented by the key point data and the 3D contour feature implicitly included by the human body point cloud data may be fused, to provide data support for subsequent human body reconstruction and human hand reconstruction.

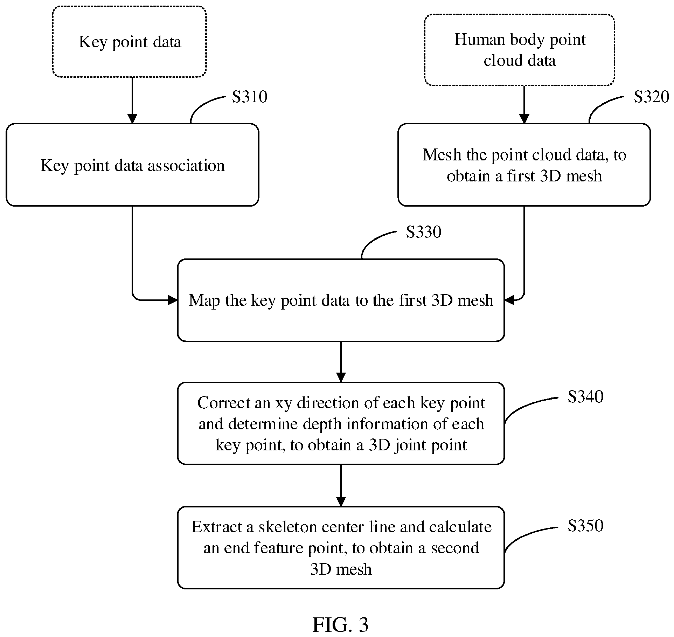

FIG. 3 shows an example of an implementation procedure of obtaining the second 3D mesh. As shown in FIG. 3, the procedure may include the following steps:

Step S310: Associate the key point data of the user with the hand key point data of the user.

In an implementation, to prevent a case in which a human hand and a human body belong to different users due to shielding or the like, a hand key point and a key point may be associated. Herein, association may be performed only for pre-selected key points. For example, because the gesture motion is mainly related to the upper limb, key points (the key points include joint points and feature points) of an upper part (like a head, a neck, a torso, an arm, or a hand) of the human body may be pre-selected for association, and another key point or another part of the human body may be ignored or not be considered, to reduce operation complexity. The vehicle cockpit scenario is used as an example, 16 skeleton points of the upper body of the human body may be selected for association, and a part other than the 16 skeleton points may be ignored.

In an implementation, the key point data may be associated with the hand key point data of the user with reference to Kalman filtering and a Hungarian matching algorithm.

Step S320: Extract the human body point cloud data (namely, the human body point cloud data of the user) that includes hand information, and mesh the human body point cloud data, to construct a topological contour of the human body, so as to obtain the first 3D mesh.

In this embodiment of this application, various applicable surface reconstruction algorithms may be used to mesh the human body point cloud data. Herein, the surface reconstruction algorithm may be, but is not limited to, a Poisson algorithm, a Crust algorithm, or the like. In an implementation, the human body point cloud data may be used to perform surface reconstruction based on a Crust algorithm of a Voronoi diagram, to generate meshes used to form the first 3D mesh, so as to finally obtain the first 3D mesh. In this way, an automation degree is high, and excessive manual intervention is not required, so that operations, such as filling holes or processing intersecting facets in a later stage, of many similar algorithms or related software are avoided, and this is more suitable for the vehicle cockpit scenario.

Step S330: Map the key point data to the first 3D mesh, to obtain xy plane mapping point data of each key point in the first 3D mesh.

An xy plane represents an imaging plane of the first camera, and an xy direction below represents an xy direction of the imaging plane of the first camera.

Step S340: Calculate an iso-line with reference to the xy plane mapping point data of each key point in the first 3D mesh and the first 3D mesh, correct an xy direction of each key point, and determine depth information of each key point, to obtain a 3D joint point, namely, a joint point in the first 3D mesh and a first 3D location of the joint point.

In a possible implementation, a geodetic distance iso-surface on which a joint center point is located may be determined based on a cross section roundness determining criterion. Herein, the upper limb and the finger each may be calculated based on a circular cylinder, and the torso or the like may be calculated based on an ellipse, to calculate a center of gravity of a level set curve, so as to obtain a first 3D location of the joint center point of the first 3D mesh. The first 3D location includes depth information of the joint center point.

Step S350: Extract a skeleton center line of the human body based on the joint point in the first 3D mesh and the first 3D location of the joint point, calculate an end feature point of the human body, and obtain the second 3D mesh based on the skeleton center line of the human body, the end feature point of the human body, and the first 3D mesh.

In a possible implementation, a process of calculating the end feature point may be: calculating end feature point information by using a geodetic distance-based Morse function, and obtaining the end feature point of the first 3D mesh, namely, the end feature point of the upper limb and the end feature point of the hand.

In a possible implementation, a process of calculating the skeleton center line may be: using an end feature point of the first 3D mesh as a start point and fitting centers of gravity of adjacent level set curves, to form a center line, so as to obtain the skeleton of the first 3D mesh. Specifically, an end feature point of the arm is used as a start point and centers of gravity of adjacent level set curves are fitted, to form a center line, so as to obtain a skeleton of the arm; and an end feature point of the hand is used as a start point and centers of gravity of adjacent level set curves are fitted, to form a center line, so as to obtain a skeleton of the hand.

Herein, the human body includes at least a hand that performs the gesture motion, and may further include an upper limb (for example, an arm) related to the gesture motion. The skeleton center line of the human body includes a skeleton center line of the hand and a skeleton center line of the upper limb. The end feature point of the human body includes the end feature point (for example, a fingertip) of the hand and an end feature point (for example, a wrist joint point) of the upper limb.

In the example of the procedure in FIG. 3, a 2D key point is first projected on a surface of the first 3D mesh, and then an actual depth of the joint point is inferred based on a curved surface and a contour width of the first 3D mesh, to obtain the second 3D mesh, namely, the 3D mesh with the 3D joint point. The first 3D location of the joint point is accurate three-dimensional coordinates, and may be further corrected in step S230.

After the second 3D mesh is obtained, key point data that fails to be successfully fused into the second 3D mesh may be saved for direct use in step S230.

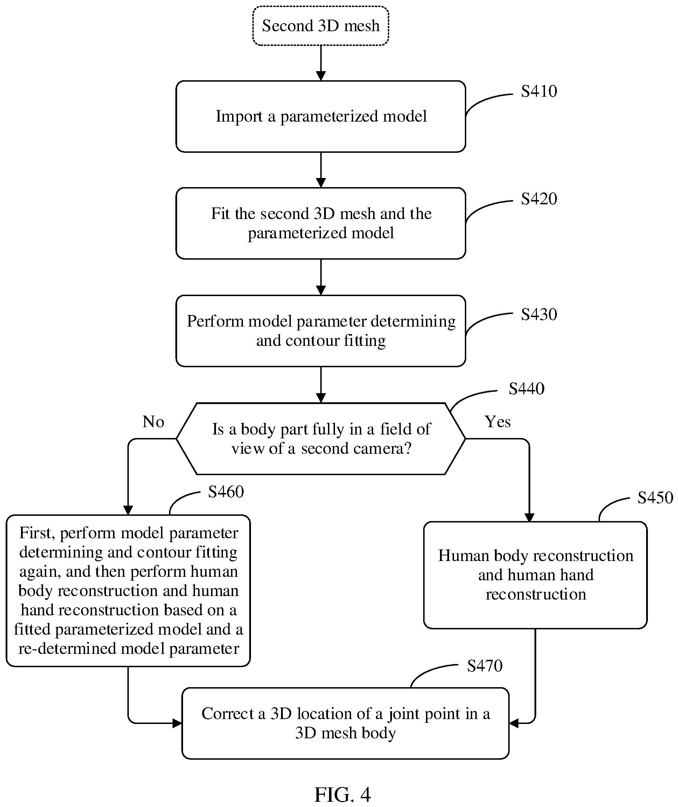

FIG. 4 shows an example of a specific implementation procedure of step S230. As shown in FIG. 4, the example of the procedure may include the following steps:

Step S410: Import the parameterized model, where the parameterized model includes the parameterized human body model and the parameterized human hand model.

Step S420: Fit the second 3D mesh and the parameterized model, to obtain a fitted parameterized model.

Step S430: For the fitted parameterized model, perform model parameter determining and contour fitting, to obtain the model parameter (namely, the reconstruction parameter described above) used for human body reconstruction and human hand reconstruction, where the model parameter includes a model parameter of the parameterized human body model and a model parameter of the parameterized human hand model.

In an implementation, parameter determining and 3D contour fitting may be performed by using the fitted parameterized model with reference to parameter optimization approximation and a neural network model such as RingNet. For example, the model parameter used for human body reconstruction and human hand reconstruction may include but is not limited to an arm length, a rear arm width, a forearm width, a palm width, a finger width, or the like.

Step S440: Determine whether a body part in the first image is fully in the field of view of the second camera, and if the body part in the first image is fully in the field of view of the second camera, continue to perform step S450; otherwise, continue to perform step S460.

In an implementation, whether the body part included in the first image is fully included in the second image may be determined, to determine whether all human body motion of the user is in the field of view of the second camera. For example, when it is determined, by extracting the key point data, that the first image includes the arm and the hand that perform the gesture motion, in this step, it may be determined whether the human body point cloud data in the second image includes the point cloud data of the arm and the hand that perform the gesture motion. If the human body point cloud data in the second image includes the point cloud data, it may be considered that both the arm and the hand that perform the gesture motion are included in the second image, that is, both are in the field of view of the second camera; otherwise, it may be considered that the body part included in the first image is not fully included in the second image, that is, not fully is in the field of view of the second camera.

Step S450: Perform human body reconstruction and human hand reconstruction based on the fitted parameterized model and the model parameter, to obtain the 3D mesh body (namely, the first 3D feature), and continue to perform step S470.

Step S460: Obtain mesh data of the key point data that fails to be fused, first fuse the mesh data and the fitted parameterized model, to perform model parameter determining and contour fitting again, then perform human body reconstruction and human hand reconstruction based on the fitted parameterized model and a re-determined model parameter, to obtain the 3D mesh body, and continue to perform step S470.

Herein, the mesh data of the key point data may be obtained by using a mesh construction model. The mesh construction model may be any model that may construct a mesh based on data, for example, may be a neural network or other machine learning model.

Step S470: Correct the 3D location of the joint point in the 3D mesh body.

In this step, the first 3D location of the joint point in the second 3D mesh is adjusted based on the 3D mesh body obtained in step S450 or step 460 and based on a constraint parameter (for example, constraint of joints and approximate size ranges of a plurality of parts of the human body), to obtain the second 3D location of the joint point. Therefore, the 3D location of the joint point is corrected based on the 3D mesh body and the constraint parameter of the 3D mesh body, so that the 3D location of the joint point in the 3D mesh body is more accurate, and is more consistent with an actual human status.

In an implementation, this step may include: correcting a 3D location of a joint point of an upper limb part in the 3D mesh body, and correcting a 3D location of a hand joint point in the 3D mesh body. Herein, if hardware performance permits, correction of the joint point of the upper limb part and the correction of the hand joint point may be performed simultaneously, to improve efficiency.

In an implementation, 3D locations of joint points in the 3D mesh body may be adjusted based on parameters of the 3D mesh body, for example, an arm length, a rear arm width, a forearm width, a palm width, and a finger width, so that 3D locations of these joint points meet preset joint point constraint. For example, a spatial location of a joint point of an elbow in the 3D mesh body may be adjusted based on the arm length, so that the location of the joint point of the elbow in the arm meets constraint thereof. For another example, a spatial location of a joint point of a finger in the 3D mesh body may be adjusted based on the finger width, so that the location of the joint point of the finger in the finger meets constraint thereof.

In the example of the procedure in FIG. 4, a refined 3D mesh body may be obtained by using the prior parameterized model, so that subsequent prediction of a track and a falling point of a finger, and the like may be more accurate. In the example in FIG. 4, if the body part is outside the field of view of the second camera, it indicates that the second image lacks some depth information of the body part. In this case, the mesh data of the key point data may be introduced into 3D mesh body reconstruction. In this way, related human body details, especially hand details, may still be restored, to avoid a gesture recognition failure caused by a fact that the body part (for example, the hand) occasionally moves out of the field of view of the second camera in the continuous gesture execution process, so as to improve continuity and accuracy of gesture recognition. If the body part is fully in the field of view of the second camera, it indicates that the second image includes most or even all depth information of the body part. In this case, there is no need to fuse the mesh data of the key point data with the 3D mesh body obtained through 3D reconstruction, and related human body details may be restored by directly using the 3D mesh body obtained through 3D reconstruction. In this way, a calculation amount and calculation complexity may be reduced, to reduce a hardware resource loss and occupation, so as to reduce hardware costs.

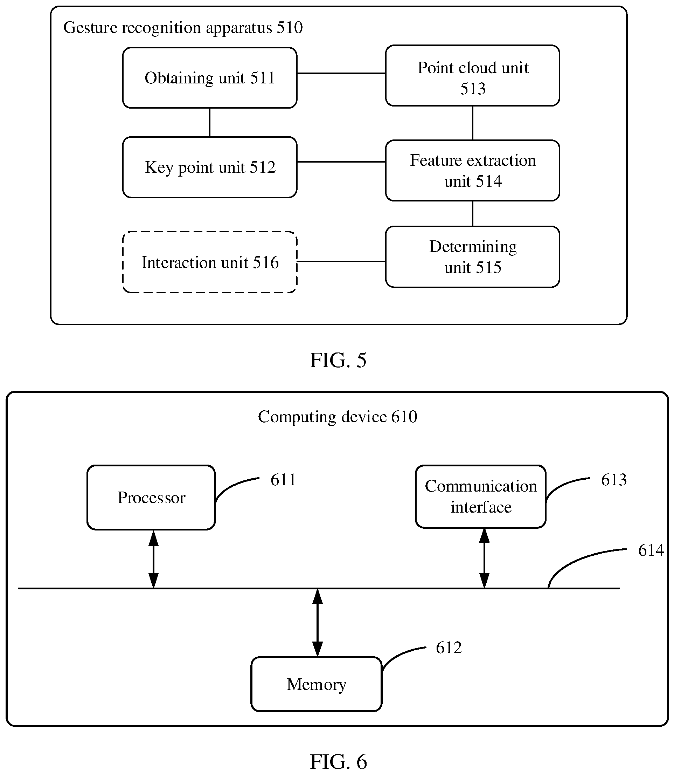

FIG. 5 shows an example of a structure of a gesture recognition apparatus 510 according to an embodiment of this application. As shown in FIG. 5, the gesture recognition apparatus 510 may include:

an obtaining unit 511, configured to obtain a first image and a second image, where the first image and the second image include a body part corresponding to a gesture motion;
a key point unit 512, configured to obtain key point data of the body part based on the first image;
a point cloud unit 513, configured to obtain human body point cloud data based on the second image;
a feature extraction unit 514, configured to obtain a first 3D feature based on the key point data, the human body point cloud data, and a first machine learning model, where the first 3D feature includes a 3D contour feature of the body part; and
a determining unit 515, configured to determine gesture motion information of a user based on the first 3D feature.

In some embodiments, the first 3D feature may further include a 3D location of a joint point of the body part.

In some embodiments, the obtaining unit 511 is specifically configured to obtain the first image at a first preset angle by using a first camera; and/or is specifically configured to obtain the second image at a second preset angle by using a second camera.

In some embodiments, the body part includes an upper limb part corresponding to the gesture motion, and the first 3D feature includes a 3D contour feature of the upper limb part and a 3D location of a joint point of the upper limb part.

In some embodiments, the feature extraction unit 514 is specifically configured to: obtain a second 3D feature based on the key point data and the human body point cloud data, where the second 3D feature includes the 3D contour feature of the body part; obtain a third 3D feature based on the key point data and the second 3D feature, where the third 3D feature includes the 3D contour feature of the body part and a first 3D location of the joint point of the body part; and obtain the first 3D feature based on the third 3D feature and the first machine learning model, where the first 3D feature includes the 3D contour feature of the body part and a second 3D location of the joint point of the body part.

In some embodiments, the feature extraction unit 514 is specifically configured to: determine a reconstruction parameter based on key point data unused for the third 3D feature, the third 3D feature, and the first machine learning model; and perform human body reconstruction and human hand reconstruction based on the reconstruction parameter and the first machine learning model, to obtain the first 3D feature.

In some embodiments, the first machine learning model includes a parameterized human body model and a parameterized human hand model.

In some embodiments, the feature extraction unit 514 is further configured to: before obtaining the first 3D feature, project the key point data and the human body point cloud data to a predetermined coordinate system, to complete registration.

In some embodiments, the gesture motion information includes one or more of fingertip falling point information, finger pointing direction information, fingertip movement track information, gesture type information, and first indication information, and the first indication information indicates that the gesture motion is effective or ineffective.

In some embodiments, the determining unit 515 is specifically configured to:

obtain one or more of user information of the gesture motion, a pose of the body part, and a movement track of the body part based on the 3D location of the joint point of the body part of the first 3D feature; and
obtain the first indication information of the gesture motion based on the one or more of the user information, the pose of the body part, and the movement track of the body part.

In some embodiments, the gesture recognition apparatus 510 may further include an interaction unit 516, configured to implement interaction between an interaction object and the user in response to the gesture motion information.

In some embodiments, the interaction unit 516 is specifically configured to: when the first indication information indicates that the gesture motion is effective, implement interaction between an interaction object and the user based on the gesture motion information.

FIG. 6 is a schematic diagram of a structure of an electronic device 610 according to an embodiment of this application. The electronic device 610 includes one or more processors 611 and one or more memories 612.

The processor 611 may be connected to the memory 612. The memory 612 may be configured to store program code and data. Therefore, the memory 612 may be a storage unit in the processor 611, an external storage unit independent of the processor 611, or a component including the storage unit in the processor 611 and the external storage unit independent of the processor 611.

Optionally, the electronic device 610 may further include a communication interface 613. It should be understood that the communication interface 613 in the electronic device 610 shown in FIG. 6 may be used for communication with another device.

Optionally, the electronic device 610 may further include a bus 614. The memory 612 and the communication interface 613 may be connected to the processor 611 through the bus 614. The bus 614 may be a peripheral component interconnect (Peripheral Component Interconnect, PCI) bus, an extended industry standard architecture (Extended Industry Standard Architecture, EISA) bus, or the like. The bus 614 may be classified into an address bus, a data bus, a control bus, and the like. For ease of representation, only one line is used for representation in FIG. 6, but this does not mean that there is only one bus or only one type of bus.

It should be understood that in this embodiment of this application, the processor 611 may be a central processing unit (central processing unit, CPU). The processor may alternatively be a general-purpose processor, a digital signal processor (digital signal processor, DSP), an application-specific integrated circuit (application-specific integrated circuit, ASIC), a field programmable gate array (field programmable gate Array, FPGA) or another programmable logic device, a discrete gate or transistor logic device, or a discrete hardware component. The general-purpose processor may be a microprocessor, or the processor may be any conventional processor or the like. Alternatively, the processor 611 uses one or more integrated circuits, and is configured to execute a related program, to implement the technical solutions provided in embodiments of this application.

The memory 612 may include a read-only memory and a random access memory, and provides instructions and data for the processor 611. A part of the processor 611 may further include a non-volatile random access memory. For example, the processor 611 may further store device type information.

When the electronic device 610 runs, the processor 611 executes computer-executable instructions in the memory 612 to perform the operation steps of the gesture recognition method.

It should be understood that the electronic device 610 according to this embodiment of this application may correspond to a corresponding execution body of the method according to embodiments of this application, and the foregoing and other operations and/or functions of modules in the electronic device 610 are separately intended to implement corresponding procedures of the methods in embodiments. For simplicity, details are not described herein again.

The following describes a system architecture and an application environment in embodiments of this application by using examples.

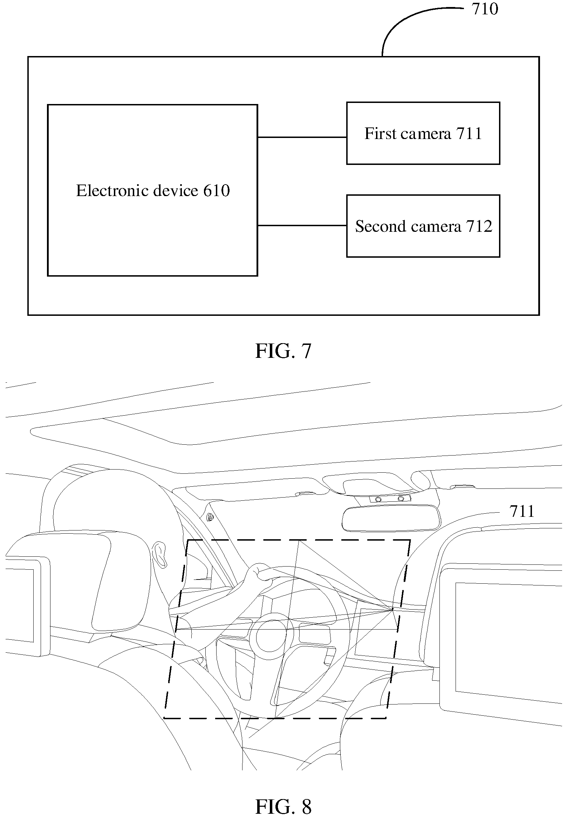

FIG. 7 shows an example of an architecture of a gesture-based human-machine interaction system 710 according to an embodiment of this application. As shown in FIG. 7, the system 710 may include a first camera 711, a second camera 712, and the electronic device 610. The first camera 711 is configured to obtain a first image, the second camera 712 is configured to obtain a second image, and both the first camera 711 and the second camera 712 may communicate with the electronic device 610.

The electronic device 610 may have an image processing module (which may also be referred to as an image processing system), and the image processing module may be configured to implement the gesture recognition method. In addition, the electronic device 610 may communicate with a vehicle-mounted central control system of a vehicle. After obtaining a user intention and gesture data, the electronic device 610 generates a corresponding gesture control signal and transmits the gesture control signal to the vehicle-mounted central control system. The vehicle-mounted central control system controls, based on the gesture control signal, a related vehicle-mounted device to respond to a gesture of a user, to implement gesture control of the user on the vehicle-mounted device by capturing the first image and the second image of a scenario in a vehicle cockpit. Optionally, the electronic device 610 may be a part of the vehicle-mounted central control system. For example, the electronic device 610 may be a functional unit/module in an in-vehicle infotainment, a cockpit domain controller (cockpit domain controller, CDC), or a mobile data center/multi-domain controller (Mobile Data Center/Multi-Domain Controller, MDC). A form and a deployment manner of the electronic device are not limited in embodiments of this application. Herein, for a detailed structure of the electronic device 610, refer to the embodiment in FIG. 6. Details are not described herein again. In actual application, the electronic device 610 may be configured on a vehicle-mounted end and/or a cloud.

The first camera 711 and/or the second camera 712 may separately communicate with the electronic device 610 in various manners such as a wired connection or wireless communication. For example, each camera may be coupled to the electronic device 610 through a cable, an adapted adapter, or the like. For another example, the first camera 711 and/or the second camera 712 may separately communicate with the electronic device 610 in various applicable manners such as a wireless manner or a wired manner.

The first camera 711 is configured to collect the first image, and the first image includes a body part corresponding to a gesture motion. The first camera 711 may be any sensor capable of obtaining an image. In an example, to improve accuracy of gesture recognition, the first camera 711 is preferably an IR camera with high resolution, an RGB camera, or another similar camera, to capture more details of a body part (for example, an arm or a hand) of the user. The second camera 712 is configured to collect the second image, and the second image includes a body part corresponding to a gesture motion. The second camera 712 may be any sensor capable of obtaining an image. In an example, to improve accuracy of gesture recognition, the second camera 712 may be a depth camera, for example, a TOF camera, a structured light camera, a binocular camera, or another similar camera or camera module, to capture more details of a body part (for example, an arm or a hand) of the user. It may be understood that the camera in this embodiment of this application includes any sensor that can directly or indirectly obtain a 2D or 3D image, such as a camera, a lens group, a camera lens (module), a lidar, or a millimeter-wave radar.

In some embodiments, the first camera may be installed at a first location (for example, a central control area, a steering pillar area, or an A-pillar area on a driver side) of the vehicle cockpit, and is specifically configured to collect the first image at a first preset angle; and/or the second camera may be installed at a second location (for example, a rear view mirror location in the cockpit, an A-pillar area on a front passenger side, or a center console area) of the vehicle cockpit, and is specifically configured to collect the second image at a second preset angle.

A field of view of the first camera 711 and a field of view of the second camera 712 cover a pre-selected gesture effective area, and the gesture effective area is an area (for example, may be a rectangular area) in which a predefined gesture can be activated. In some embodiments, the first camera 711 may be installed in the vehicle cockpit and directly face a preset gesture effective area; and/or the second camera 712 may be installed in the vehicle cockpit and overlook the gesture effective area at a predetermined top-view angle. In this way, high resolution and 2D information of the first camera 711 and low resolution and 3D information of the second camera 712 complement with each other. A 3D mesh body including an internal joint point and an external contour of the body part may be reconstructed by combining the two, and gesture data with high accuracy may be obtained based on the 3D mesh body. In some examples, a start gesture made by the user in the vehicle cockpit in the gesture effective area may be considered as an effective gesture, and therefore gesture recognition of the user may be triggered.

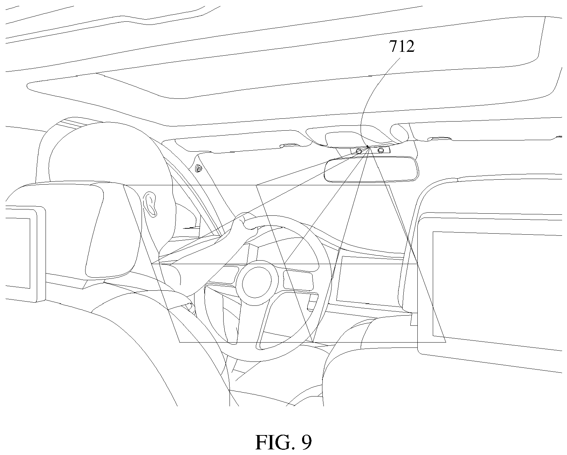

A driver in the vehicle cockpit is used as an example. When executing a gesture, the driver usually points, with an index finger facing forward, to a large central display screen or a HUD of the vehicle, and an arm joint of the driver also moves accordingly. FIG. 8 is an example diagram of installing the first camera 711 in the vehicle cockpit, FIG. 9 is an example diagram of installing the second camera 712 in the vehicle cockpit. Gesture recognition of the driver is implemented by capturing a 2D image and a depth image that include an arm and a hand of the driver.

As shown in FIG. 8, the first camera 711 may be installed at a central control location of the vehicle cabin and face a hand area (for example, the gesture effective area) of the driver. The first camera 711 may collect the first image in a manner of facing a driver gesture, to incorporate as many gesture and arm motion details of the driver as possible in the first image, and obtain more pose details of the arm and gesture of the driver. In this way, key point information of the arm and gesture of the driver can be accurately captured and recognized based on the first image, further, with reference to a contour point cloud from the depth image, a motion, a pose, and a movement track of the upper limb and the hand are restored, and finally, a user intention that meets an actual expectation of the driver and gesture motion information of which track is clear is obtained. In this embodiment of this application, an installation location of the first camera 711 is not limited to the foregoing location. For example, the first camera 711 may alternatively be installed at a location above a steering pillar, and a location of an A pillar and the center console near the A pillar. The location may be adjusted based on a layout design requirement of the vehicle cockpit.

To obtain directional gesture motion information such as fingertip falling point and fingertip pointing direction as accurately as possible, the second camera 712 may be installed at a top-view location, to estimate the finger pointing direction more accurately based on depth information. For example, as shown in FIG. 9, the second camera 712 may be installed at a rear view mirror location in the front of the vehicle cockpit, and overlook a hand area (for example, the gesture effective area) of the driver at a predetermined top-view angle, where the top-view angle (namely, the second preset angle above) may be freely adjusted based on an actual layout of the vehicle cockpit and a location of the driver, for example, may alternatively be arranged at a location of an A pillar on a front passenger side and a center console near the front passenger side. A specific value of the top-view angle is not limited in this specification. Therefore, the second image including the hand that performs the gesture motion may be obtained, so that hand point cloud data of the driver is accurately captured and recognized based on the second image, and a fine first 3D feature is restored with reference to the first image, to finally obtain clear and clearly directional gesture motion information.

In some embodiments, installation locations of the first camera 711 and the second camera 712 may be adjusted, to form a parallax, so as to avoid losing excessive details when a finger of the user is self-shielded, implement complementarity between high resolution and low resolution and complementarity between 2D information and 3D information, and further obtain a high-precision 3D mesh body. In some examples, the field of view of the first camera 711 may be slightly greater than the gesture effective area, to incorporate as many details of a related body part of the user as possible into the first image, so as to avoid loss of key details of a gesture when a finger is self-shielded, restore a more refined first 3D feature, and further obtain clear and clearly directional gesture motion information.

The gesture-based human-machine interaction system in this embodiment of this application may be but is not limited to a driver monitoring system, a cockpit monitoring system, a panoramic image system, a vehicle-mounted entertainment information system, or the like.

According to the gesture-based human-machine interaction system in this embodiment of this application, multi-angle and multi-modal cameras are used to combine the 2D image and the depth image. Refined 3D mesh reconstruction is performed based on the first image and the second image in combination with the parameterized human body model, and the user intention is further determined based on the first 3D feature, to obtain the gesture motion information including the first indication information, so as to implement a high-precision cockpit gesture interaction function. The system in this embodiment of this application can be completed based on a high-precision RGB/IR camera and a TOF camera, and has advantages such as high precision, low costs, and small resource occupation.

An embodiment of this application further provides a vehicle, and the vehicle may include the computing device 610 described above, a computer-readable storage medium described below, or the gesture-based human-machine interaction system 710 described above.

The following describes in detail an example of a specific implementation of the gesture recognition method in embodiments of this application with reference to the foregoing system.

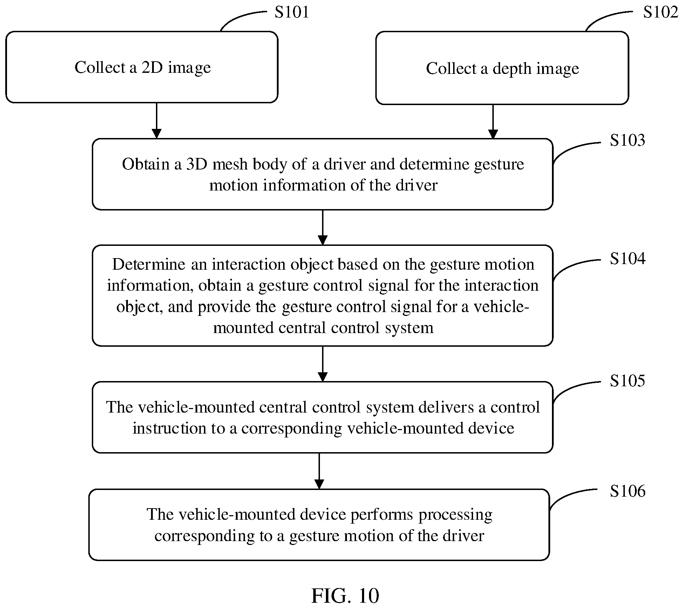

FIG. 10 shows an example of a procedure of gesture recognition according to an embodiment of this application. As shown in FIG. 10, the example of the procedure may include:

Step S101: The first camera collects the 2D image (namely, the first image described above) of the vehicle cockpit scenario, where the 2D image includes the upper limb parts such as the hand of the driver and the arm of the driver that are in the gesture effective area.

Step S102: The second camera collects the depth image (namely, the second image described above) of the vehicle cockpit scenario, where the parallax exists between the depth image and the 2D image, and the depth image includes the hand of the driver in the gesture effective area.

Step S103: The electronic device obtains the 3D mesh body (namely, the first 3D feature described above) of the driver based on the 2D image and the 3D image, to determine the user intention of the driver from the 3D mesh body, and obtain the gesture motion information including the first indication information.

Step S104: When the first indication information indicates that the driver is performing the gesture motion, that is, the gesture motion is effective, the electronic device determines an interaction object based on the gesture motion information, obtains a gesture control signal for the interaction object, and provides the gesture control signal for the vehicle-mounted central control system.

Step S104: The vehicle-mounted central control system converts the gesture motion information in the gesture control signal into a control instruction, and delivers the control instruction to a vehicle-mounted device of the corresponding interaction object.

Step S105: The vehicle-mounted device performs, based on the control instruction, processing (for example, map zooming out/in, round-view angle control, and adjustment of various APP knob progress bars in a vehicle-mounted scenario) corresponding to the gesture motion of the driver.

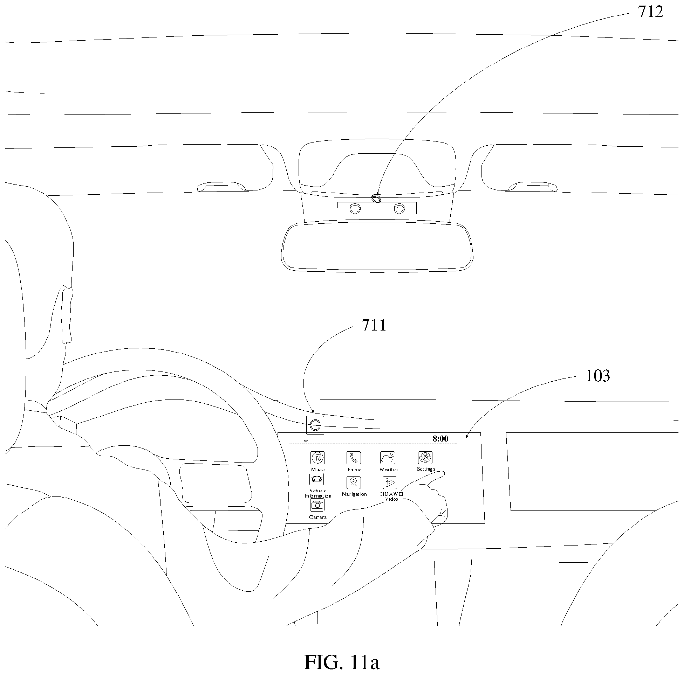

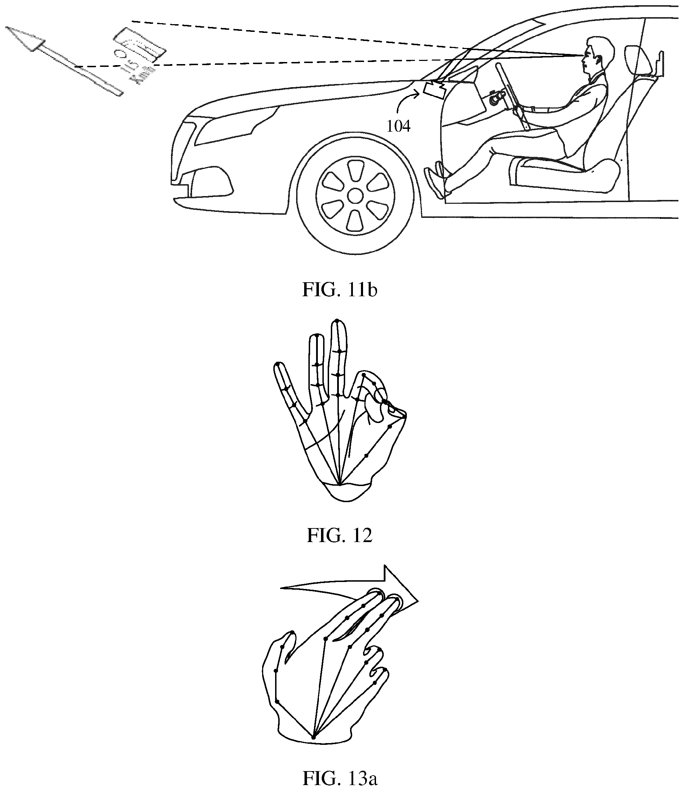

FIG. 11a and FIG. 11b each are a schematic diagram of an application scenario in a vehicle cockpit environment according to an embodiment of this application. As shown in FIG. 11a, the gesture-based human-machine interaction system 710 is deployed in the vehicle cockpit, so that the driver or another passenger may conveniently perform gesture control or human-machine interaction on a display like a central control display 103 in the vehicle cockpit. As shown in FIG. 11b, the gesture-based human-machine interaction system 710 is deployed in the vehicle cockpit, so that the driver or another passenger may conveniently perform gesture control or human-machine interaction on a device like a projection apparatus 104 of the HUD in the vehicle cockpit.

Similarly, the gesture-based human-machine interaction system 710 is used, it may also be convenient for the user to perform gesture control on a physical button in the vehicle cockpit, for example, related physical buttons of a vehicle window, vehicle door, light, multimedia, air conditioner, steering wheel, seat belt, seat, head pillow, rear view mirror, wiper, tire pressure, auxiliary parking, and electronic hand brake.

Similarly, gesture control may be further performed on another vehicle-mounted device (or peripheral) of the vehicle by using the human-machine interaction system 710. For example, gesture control may be performed on an electronic device like a mobile phone or a tablet computer in the vehicle cockpit by using the human-machine interaction system 710.

FIG. 12 shows an example of a predetermined gesture. The gesture may implement human-machine interaction by using an "OK" hand pose, for example, triggering an association function (for example, enabling a gesture operation) or a switch of a predetermined device (for example, an air conditioner, a speaker, or a seat back) in the vehicle cockpit.

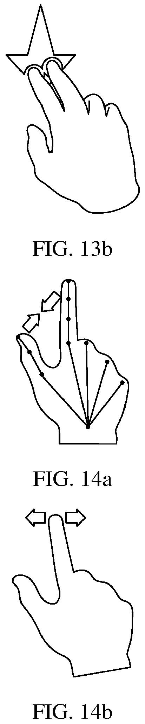

FIG. 13a and FIG. 13b each show an example of a two-finger dragging gesture. These gestures may implement human-machine interaction by using a hand pose in which a thumb is micro-curved and stretched, an index finger and a middle finger are closed together and stretched, and another finger is tightly held, and in combination with motions of an index finger fingertip and a middle finger fingertip. In FIG. 13a, an operation like dragging to the right or sliding to the right may be implemented in combination with a motion of moving the index finger fingertip and the middle finger fingertip to the right in parallel. In FIG. 13a, an operation like dragging down or sliding down may be implemented in combination with a motion of moving down the index finger fingertip and the middle finger fingertip in parallel.

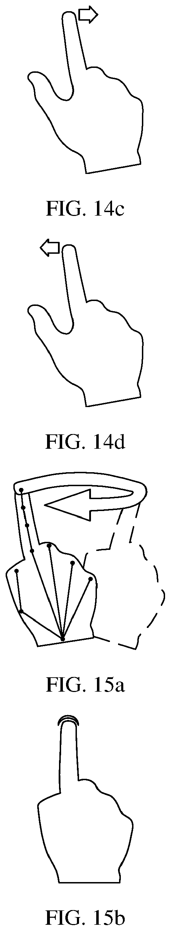

FIG. 14a to FIG. 14d each show an example of a thumb stretching gesture. These gestures may implement human-machine interaction by combining a hand pose in which a thumb is stretched, an index finger is stretched, and another finger is tightly held, and motions of an index finger fingertip and/or a thumb fingertip. For example, in FIG. 14a, an operation like zooming out/in may be implemented in combination with a motion in which the thumb fingertip and the index finger fingertip approach to each other or moving away from each other. In FIG. 14b, an operation like page turning or moving (for example, an icon) may be implemented in combination with a leftward/rightward movement motion of the index finger fingertip. In FIG. 14c, an operation like page turning, scroll bar adjustment, progress bar adjustment, or volume adjustment may be implemented in combination with a rightward movement motion of the index finger fingertip. In FIG. 14d, an operation like page turning, scroll bar adjustment, progress bar adjustment, or volume adjustment may be implemented in combination with a leftward movement motion of the index finger fingertip.

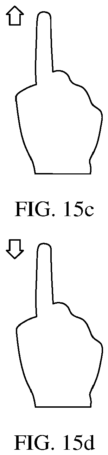

FIG. 15a to FIG. 15d each show an example of a thumb stretching gesture. These gestures may implement human-machine interaction by combining a hand pose in which an index finger is stretched and another finger is tightly held, and motions of an index finger fingertip. In FIG. 15a, an operation like zooming out/in, physical button turning on/off, or associated function enabling/disabling may be implemented in combination with a circle drawing motion of the index finger fingertip and a hand swing motion. In FIG. 15b, an operation like selecting or tapping may be implemented in combination with a down press motion of the index finger fingertip. In FIG. 15c, an operation like page turning, scroll bar adjustment, progress bar adjustment, or volume adjustment may be implemented in combination with an upward movement motion of the index finger fingertip. In FIG. 15d, an operation like page turning, scroll bar adjustment, progress bar adjustment, or volume adjustment may be implemented in combination with a downward movement motion of the index finger fingertip.

In FIG. 12 to FIG. 15d, a black dot represents a hand joint point, and a connection line between black dots represents a hand skeleton.

In embodiments of this application, at an algorithm layer, a human body/hand key point obtained by using a 2D camera is combined with a 3D point cloud, to perform joint inference and unified modeling, to finally return accurate locations of joint points from a human arm to a finger end in a cockpit coordinate system. Further, information such as a gesture type, a fingertip track, and a fingertip pointing direction is calculated, to finally combine with a vehicle-mounted device such as a large central display screen or a HUD, so as to implement refined gesture control.

In embodiments of this application, at a hardware layer, a second camera for capturing a depth image is combined with a first camera for capturing a 2D image, to incorporate a gesture and a human body into a field of view as much as possible, and obtain more human body and human hand pose details. The two cameras may form a parallax, to avoid losing excessive details when a finger is self-shielded, and may further enable a finger contour and a finger key point accurately to be captured and recognized based on complementarity between high resolution and low resolution and complementarity between 2D information and 3D information. After 3D reconstruction, a relative location in a cockpit coordinate system may be obtained, and a fine hand motion may be restored. This is finally used to control a HUD and a large central display screen.

An embodiment of this application further provides a computer-readable storage medium. The computer-readable storage medium stores a computer program, and when the program is executed by a processor, the program is used to perform a gesture recognition method. The method includes the solutions described in the foregoing embodiments.

Herein, the computer-readable medium may be a computer-readable signal medium or a computer-readable storage medium. The computer-readable storage medium may be but is not limited to an electric, magnetic, optical, electromagnetic, infrared, or semiconductor system, apparatus, or device, or any combination thereof. More specific examples (a non-exhaustive list) of the computer-readable storage medium include an electrical connection having one or more wires, a portable computer disk, a hard disk, a random access memory, a read-only memory, an erasable programmable read-only memory, an optical fiber, a portable compact disk read-only memory, an optical storage device, a magnetic storage device, or any proper combination thereof.

It should be noted that the descriptions are merely some embodiments of this application and technical principles applied to embodiments. A person skilled in the art may understand that this application is not limited to the foregoing specific embodiments described herein, and a person skilled in the art may make various obvious changes, readjustments, and replacements without departing from the protection scope of this application. Therefore, although this application is described in detail by using the foregoing embodiments, this application is not limited to the foregoing embodiments, and may further include more other equivalent embodiments without departing from the concept of this application. These embodiments all fall within the protection scope of this application.

**Claims**

**1.** A gesture recognition method, comprising:

obtaining a first image and a second image, wherein the first image and the second image comprise a body part corresponding to a gesture motion;

obtaining key point data of the body part based on the first image;

obtaining human body point cloud data based on the second image;

obtaining a first 3D feature based on the key point data, the human body point cloud data, and a first machine learning model, wherein the first 3D feature comprises a 3D contour feature of the body part; and

determining gesture motion information of a user based on the first 3D feature.

2. The method according to claim 1, wherein the first 3D feature further comprises a 3D location of a joint point of the body part.

3. The method according to claim 1 or 2, wherein the first image is obtained at a first preset angle by using a first camera, and the second image is obtained at a second preset angle by using a second camera.

4. The method according to any one of claims 1 to 3, wherein the body part comprises an upper limb part corresponding to the gesture motion, and the first 3D feature comprises a 3D contour feature of the upper limb part and a 3D location of a joint point of the upper limb part.

5. The method according to any one of claims 1 to 4, wherein the obtaining a first 3D feature based on the key point data, the human body point cloud data, and a first machine learning model specifically comprises:

obtaining a second 3D feature based on the key point data and the human body point cloud data, wherein the second 3D feature comprises the 3D contour feature of the body part;

obtaining a third 3D feature based on the key point data and the second 3D feature, wherein the third 3D feature comprises the 3D contour feature of the body part and a first 3D location of the joint point of the body part; and

obtaining the first 3D feature based on the third 3D feature and the first machine learning model, wherein the first 3D feature comprises the 3D contour feature of the body part and a second 3D location of the joint point of the body part.

6. The method according to claim 5, wherein the obtaining the first 3D feature based on the third 3D feature and the first machine learning model specifically comprises:

determining a reconstruction parameter based on key point data unused for the third 3D feature, the third 3D feature, and the first machine learning model; and

performing human body reconstruction and human hand reconstruction based on the reconstruction parameter and the first machine learning model, to obtain the first 3D feature.

7. The method according to any one of claims 1 to 6, wherein the first machine learning model comprises a parameterized human body model and a parameterized human hand model.

8. The method according to any one of claims 1 to 7, further comprising: before the obtaining a first 3D feature, projecting the key point data and the human body point cloud data to a predetermined coordinate system, to complete registration.

9. The method according to any one of claims 1 to 8, wherein the gesture motion information comprises one or more of fingertip falling point information, finger pointing direction information, fingertip movement track information, gesture type information, and first indication information, and the first indication information indicates that the gesture motion is effective or ineffective.

10. The method according to any one of claims 1 to 9, wherein the determining gesture motion information of a user based on the first 3D feature comprises:

obtaining one or more of user information of the gesture motion, a pose of the body part, and a movement track of the body part based on the 3D location of the joint point of the body part of the first 3D feature; and

obtaining the first indication information of the gesture motion based on the one or more of the user information, the pose of the body part, and the movement track of the body part.

11. The method according to any one of claims 1 to 10, further comprising: implementing interaction between an interaction object and the user in response to the gesture motion information.

12. The method according to any one of claims 8 to 10, further comprising: when the first indication information indicates that the gesture motion is effective, implementing interaction between an interaction object and the user based on the gesture motion information.

13. A gesture recognition apparatus, comprising:

an obtaining unit, configured to obtain a first image and a second image, wherein the first image and the second image comprise a body part corresponding to a gesture motion;
a key point unit, configured to obtain key point data of the body part based on the first image;
a point cloud unit, configured to obtain human body point cloud data based on the second image;
a feature extraction unit, configured to obtain a first 3D feature based on the key point data, the human body point cloud data, and a first machine learning model, wherein the first 3D feature comprises a 3D contour feature of the body part; and
a determining unit, configured to determine gesture motion information of a user based on the first 3D feature.

14. The apparatus according to claim 13, wherein the first 3D feature further comprises a 3D location of a joint point of the body part.

15. The apparatus according to claim 13 or 14, wherein the obtaining unit is specifically configured to obtain the first image at a first preset angle by using a first camera; and/or is specifically configured to obtain the second image at a second preset angle by using a second camera.

16. The apparatus according to any one of claims 13 to 15, wherein the body part comprises an upper limb part corresponding to the gesture motion, and the first 3D feature comprises a 3D contour feature of the upper limb part and a 3D location of a joint point of the upper limb part.

17. The apparatus according to any one of claims 13 to 16, wherein the feature extraction unit is specifically configured to:

obtain a second 3D feature based on the key point data and the human body point cloud data, wherein the second 3D feature comprises the 3D contour feature of the body part;
obtain a third 3D feature based on the key point data and the second 3D feature, wherein the third 3D feature comprises the 3D contour feature of the body part and a first 3D location of the joint point of the body part; and
obtain the first 3D feature based on the third 3D feature and the first machine learning model, wherein the first 3D feature comprises the 3D contour feature of the body part and a second 3D location of the joint point of the body part.

18. The apparatus according to claim 17, wherein the feature extraction unit is specifically configured to:

determine a reconstruction parameter based on key point data unused for the third 3D feature, the third 3D feature, and the first machine learning model; and
perform human body reconstruction and human hand reconstruction based on the reconstruction parameter and the first machine learning model, to obtain the first 3D feature.

19. The apparatus according to any one of claims 13 to 18, wherein the first machine learning model comprises a parameterized human body model and a parameterized human hand model.

20. The apparatus according to any one of claims 13 to 19, wherein the feature extraction unit is further configured to: before obtaining the first 3D feature, project the key point data and the human body point cloud data to a predetermined coordinate system, to complete registration.

21. The apparatus according to any one of claims 13 to 20, wherein the gesture motion information comprises one or more of fingertip falling point information, finger pointing direction information, fingertip movement track information, gesture type information, and first indication information, and the first indication information indicates that the gesture motion is effective or ineffective.

22. The apparatus according to any one of claims 13 to 21, wherein the determining unit is specifically configured to:

obtain one or more of user information of the gesture motion, a pose of the body part, and a movement track of the body part based on the 3D location of the joint point of the body part of the first 3D feature; and obtain the first indication information of the gesture motion based on the one or more of the user information, the pose of the body part, and the movement track of the body part.

23. The apparatus according to any one of claims 13 to 22, further comprising: an interaction unit, configured to implement interaction between an interaction object and the user in response to the gesture motion information.

24. The apparatus according to any one of claims 13 to 23, wherein the interaction unit is specifically configured to: when the first indication information indicates that the gesture motion is effective, implement the interaction between the interaction object and the user based on the gesture motion information.

25. An electronic device, comprising:

at least one processor; and
at least one memory, wherein the memory stores a computer program, and when the computer program is executed by the at least one processor, the method according to any one of claims 1 to 12 is implemented.

26. A computer-readable storage medium, wherein the computer-readable storage medium stores program instructions, and when the program instructions are executed by a computer, the computer is enabled to perform the method according to any one of claims 1 to 12.

27. A gesture-based human-machine interaction system, comprising:

a first camera, configured to collect a first image, wherein the first image comprises a body part corresponding to a gesture motion;
a second camera, configured to collect a second image, wherein the second image comprises the body part corresponding to the gesture motion;
at least one processor; and
at least one memory, wherein the memory stores a computer program, and when the computer program is executed by the at least one processor, the method according to any one of claims 1 to 12 is implemented.

28. The system according to claim 27, wherein the first camera is installed at a first location of a vehicle cockpit and is specifically configured to collect the first image at a first preset angle; and/or the second camera is installed at a second location of a vehicle cockpit and is specifically configured to collect the second image at a second preset angle.

29. A vehicle, comprising the computing device according to claim 25, the computer-readable storage medium according to claim 26, or the gesture-based human-machine interaction system according to claim 27 or 28.

Obtain a first image and a second image — S110

Obtain key point data — S120

Obtain human body point cloud data — S130

Obtain a first 3D feature based on the key point data, the human body point cloud data, and a first machine learning model — S140

Determine gesture motion information based on the first 3D feature — S150

Implement interaction between an interaction object and a user in response to the gesture motion information — S160

FIG. 1

Obtain a second 3D feature based on key point data and human body point cloud data — S210

Obtain a third 3D feature based on the key point data and the second 3D feature — S220

Obtain a first 3D feature based on the third 3D feature and a first machine learning model — S230

FIG. 2

Key point data

Human body point
cloud data

S310

Key point data association

S320

Mesh the point cloud data, to
obtain a first 3D mesh

S330

Map the key point data to the first 3D mesh

Correct an xy direction of each key point
and determine depth information of each
key point, to obtain a 3D joint point

S340

Extract a skeleton center line and calculate
an end feature point, to obtain a second
3D mesh

S350

FIG. 3

Second 3D mesh

Import a parameterized model — S410

Fit the second 3D mesh and the parameterized model — S420

Perform model parameter determining and contour fitting — S430

S440

No ← Is a body part fully in a field of view of a second camera? → Yes

S460

First, perform model parameter determining and contour fitting again, and then perform human body reconstruction and human hand reconstruction based on a fitted parameterized model and a re-determined model parameter

S450

Human body reconstruction and human hand reconstruction

S470

Correct a 3D location of a joint point in a 3D mesh body

FIG. 4

Gesture recognition apparatus 510

Obtaining unit 511

Point cloud unit 513

Key point unit 512

Feature extraction unit 514

Interaction unit 516

Determining unit 515

FIG. 5

Computing device 610

Processor — 611

Communication interface — 613

— 614

Memory — 612

FIG. 6

710

| Electronic device 610 | First camera 711 |
| | Second camera 712 |

FIG. 7

711

FIG. 8

712

FIG. 9

```
┌─────────────────────────────┐  ╭── S101          ┌─────────────────────────────┐  ╭── S102
│                             │                    │                             │
│      Collect a 2D image     │                    │     Collect a depth image   │
│                             │                    │                             │
└─────────────────────────────┘                    └─────────────────────────────┘
```

┌──────────────────────────────────────────────────────────┐  ╭── S103
│   Obtain a 3D mesh body of a driver and determine gesture │
│              motion information of the driver             │
└──────────────────────────────────────────────────────────┘

┌──────────────────────────────────────────────────────────┐  ╭── S104
│  Determine an interaction object based on the gesture motion │
│  information, obtain a gesture control signal for the interaction │
│  object, and provide the gesture control signal for a vehicle- │
│              mounted central control system              │
└──────────────────────────────────────────────────────────┘

┌──────────────────────────────────────────────────────────┐  ╭── S105
│ The vehicle-mounted central control system delivers a control │
│   instruction to a corresponding vehicle-mounted device  │
└──────────────────────────────────────────────────────────┘

┌──────────────────────────────────────────────────────────┐  ╭── S106
│     The vehicle-mounted device performs processing       │
│       corresponding to a gesture motion of the driver    │
└──────────────────────────────────────────────────────────┘

FIG. 10

712

711

103

8:00

Music  Phone  Weather  Settings

Vehicle
Information  Navigation  HUAWEI
Video

Camera

FIG. 11a

FIG. 11b

FIG. 12

FIG. 13a

FIG. 13b

FIG. 14a

FIG. 14b

FIG. 14c

FIG. 14d

FIG. 15a

FIG. 15b

FIG. 15c

FIG. 15d

## INTERNATIONAL SEARCH REPORT

| International application No. |
| --- |
| **PCT/CN2021/106968** |

| | |
| --- | --- |
| **A.** | **CLASSIFICATION OF SUBJECT MATTER** |
| | G06F 3/01(2006.01)i; G06K 9/00(2022.01)i; G06N 20/00(2019.01)i |

According to International Patent Classification (IPC) or to both national classification and IPC

| | |
| --- | --- |
| **B.** | **FIELDS SEARCHED** |

Minimum documentation searched (classification system followed by classification symbols)
   G06F,G06K,G06N

Documentation searched other than minimum documentation to the extent that such documents are included in the fields searched

Electronic data base consulted during the international search (name of data base and, where practicable, search terms used)
   CNKI, CNPAT, WPI, EPODOC, 3GPP: 手势, 动作, 姿势, 识别, 人体, 身体, 手, 相机, 摄像机, 图像, 第一, 第二, 角度, 点云, 模型, 重建, 坐标系, gesture, motion, movement, posture, identify, recognise, body, hand, camera, image, first, second, angle, point cloud, model, reconstruct, coordinate

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 112241204 A (NINGBO JUNLIAN ZHIXING TECHNOLOGY CO., LTD.) 19 January 2021 (2021-01-19)<br>   description, paragraphs 23-62 | 1-29 |
| X | CN 110221690 A (OPPO GUANGDONG MOBILE TELECOMMUNICATIONS CO., LTD.) 10 September 2019 (2019-09-10)<br>   description, paragraphs 32-82 | 1-29 |
| X | CN 113065383 A (CRRC ZHUZHOU INSTITUTE CO., LTD.) 02 July 2021 (2021-07-02)<br>   description, paragraphs 99-121 | 1-29 |
| A | CN 111552368 A (MAO WENTAO) 18 August 2020 (2020-08-18)<br>   entire document | 1-29 |
| A | US 2019311190 A1 (BEIJING SENSETIME TECHNOLOGY DEVELOPMENT CO., LTD.) 10 October 2019 (2019-10-10)<br>   entire document | 1-29 |
| A | US 10919152 B1 (NIMBLE ROBOTICS, INC.) 16 February 2021 (2021-02-16)<br>   entire document | 1-29 |

| ☑ Further documents are listed in the continuation of Box C. | ☑ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **17 March 2022** | **28 March 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/106968**

**C.     DOCUMENTS CONSIDERED TO BE RELEVANT**

| Category* | Citation of document, with indication, where appropriate, of the relevant passages | Relevant to claim No. |
|---|---|---|
| A | US 2020126249 A1 (SZ DJI TECHNOLOGY CO., LTD.) 23 April 2020 (2020-04-23) entire document | 1-29 |
| A | US 2020058137 A1 (PUJADES, S. et al.) 20 February 2020 (2020-02-20) entire document | 1-29 |

Form PCT/ISA/210 (second sheet) (January 2015)

**INTERNATIONAL SEARCH REPORT**
**Information on patent family members**

International application No.

**PCT/CN2021/106968**

| Patent document cited in search report | | | Publication date (day/month/year) | Patent family member(s) | | | Publication date (day/month/year) |
|---|---|---|---|---|---|---|---|
| CN | 112241204 | A | 19 January 2021 | None | | | |
| CN | 110221690 | A | 10 September 2019 | WO | 2020228644 | A1 | 19 November 2020 |
| CN | 113065383 | A | 02 July 2021 | None | | | |
| CN | 111552368 | A | 18 August 2020 | None | | | |
| US | 2019311190 | A1 | 10 October 2019 | WO | 2018177337 | A1 | 04 October 2018 |
| | | | | CN | 108230383 | A | 29 June 2018 |
| US | 10919152 | B1 | 16 February 2021 | US | 2021205986 | A1 | 08 July 2021 |
| US | 2020126249 | A1 | 23 April 2020 | CN | 109923583 | A | 21 June 2019 |
| | | | | WO | 2019006760 | A1 | 10 January 2019 |
| US | 2020058137 | A1 | 20 February 2020 | None | | | |